(19) Europäisches Patentamt
European Patent Office
Office européen des brevets

(11) **EP 3 591 108 B1**

(12) **EUROPEAN PATENT SPECIFICATION**

(45) Date of publication and mention
of the grant of the patent:
**20.01.2021  Bulletin 2021/03**

(51) Int Cl.:
*D04H 1/541* *(2012.01)*   *D04H 1/4391* *(2012.01)*
*D04H 1/558* *(2012.01)*   *D04H 1/559* *(2012.01)*
*B32B 5/26* *(2006.01)*   *B32B 5/02* *(2006.01)*

(21) Application number: **18760357.6**

(22) Date of filing: **01.03.2018**

(86) International application number:
**PCT/JP2018/007671**

(87) International publication number:
**WO 2018/159729 (07.09.2018 Gazette 2018/36)**

(54) **FIBER STRUCTURE AND METHOD FOR PRODUCING SAME**

FASERSTRUKTUR UND VERFAHREN ZUR HERSTELLUNG DAVON

STRUCTURE FIBREUSE ET PROCÉDÉ DE PRODUCTION D'UNE TELLE STRUCTURE FIBREUSE

(84) Designated Contracting States:
**AL AT BE BG CH CY CZ DE DK EE ES FI FR GB GR HR HU IE IS IT LI LT LU LV MC MK MT NL NO PL PT RO RS SE SI SK SM TR**

(30) Priority:  **03.03.2017   JP 2017040392**

(43) Date of publication of application:
**08.01.2020   Bulletin 2020/02**

(73) Proprietor: **Teijin Frontier Co., Ltd.**
**Osaka-shi, Osaka 530-0005 (JP)**

(72) Inventor: **SUZUKI, Atsushi**
**Osaka-shi**
**Osaka 530-0005 (JP)**

(74) Representative: **Cockerton, Bruce Roger**
**Carpmaels & Ransford LLP**
**One Southampton Row**
**London WC1B 5HA (GB)**

(56) References cited:
**EP-A1- 0 596 476      GB-A- 2 405 646**
**JP-A- H04 245 965    JP-A- H10 158 981**
**JP-A- 2012 026 059   JP-U- 3 148 056**
**JP-U- 3 151 737**

**Description**

Technical Field

The present invention relates to a fiber structure and a method for producing the same. More particularly, the present invention is concerned with a fiber structure which has excellent interlaminar peel strength, and which has an unnoticeable fold when the fiber structure is bent, and a method for producing the same. The fiber structure of the present invention can be advantageously used in mattresses for bedding, a bedspread and other bedding articles, seats for various types of vehicles, furniture cushions, and the like.

Background Art

Conventionally, fiber structures as well as polyurethane foams are used in mattresses for bedding, a bedspread, seats for various types of vehicles, furniture cushions, and the like. Further, the fiber structures have advantages in that they are easy to recycle and unlikely to cause a person who uses them feel damp, and therefore are being more frequently and widely used. However, in recent years, in the field of fiber structure, for improving the comfortable feeling of the fiber structure when a person sleeps or sits on it, the fiber structure is required to be improved in performance, such as cushioning properties and air permeability. For this reason, from the viewpoint of the physical properties of a fiber, an improvement of the physical properties of the fiber has been made by using an elastomer conjugate fiber or a fiber with a large denier. Meanwhile, from the viewpoint of the physical properties of a fiber structure, an improvement has been made by providing a fiber structure having an increased density and having a large thickness. However, when a fiber structure having a high density and a large thickness is produced, it is difficult to form a structure having a uniform density throughout the structure including the inside thereof (uniform forming), and particularly, defective forming is likely caused in the center portion of the fiber structure, leading to a problem of bottom touching feeling. Further, when defective forming is caused, the resultant fiber structure is likely to have a structure such that a buckling phenomenon similar to that caused in corrugated board easily occurs, and, when such a fiber structure is used as a nursing care bed mattress required to have a backrest function, a problem occurs. That is, when the fiber structure is just bent in half, there is a problem in that the bent portion of the fiber structure is not gently curved but an extremely noticeable fold is generated. As a method for solving the problem, there is a proposal of a method of flexing a fiber structure in a wave form in the longitudinal direction during the forming (see, for example, PTL 1). However, the proposed method has not yet solved the problem of generation of an extremely noticeable fold. On the other hand, in view of uniform forming, there is a thermoforming method in which a fiber structure in the atmospheric pressure state is subjected to wet heat treatment. However, the proposed method has not yet solved the problem of defective forming caused in the center portion of the fiber structure (see, for example, PTL 2.).

Citation List

Patent Literature

PTL 1: JP-A-2015-080685
PTL 2: JP-A-2010-253725
PTL 3: JP H04 245965
PTL4: GB 2,405,646

PTL3 relates to the provision of a hard shaped article of fiber useful as a substitute for molded article of polyurethane cushion, having small change in shape and excellent shapability. PTL3 describes a shaped article of highly entangled fibers obtained by blending crimped staple fibers of hollow fibers of polyethylene terephthalate with staple fibers of hollow core-sheath type conjugate yarn comprising a core component polymer of polyethylene terephthalate and a sheath component polymer of polyhexamethylene terephthalate/polyethylene terephthalate-based copolymer polyester as heat binder fibers and entangling and entangled points of the fibers of the shaped article are at least partially fused and fixed with the sheath component polymer of the heat binder fibers to give a hard shaped article of fibers having $\leq 20\%$ compression ratio at 0.12-0.45 g/cm$^3$ apparent density and $\geq 10$ mm thickness under 1.0 kg/cm$^2$ load.

PTL4 relates to a two-layer product for bed mattresses and upholstery comprising a lower, support layer with a firm support characteristic and an upper, comfort layer with a softer support characteristic. The support layer is made of coarse fibers and the comfort layer is made of finer fibers. The fibers are preferably polyester. The product is manufactured by forming a web of the coarser fibers and then overlaying a web of the finer fibers to form a composite web.

The composite web is then passed through a hot air circulating oven and subsequently through a cooler while under compression. The coarse fibers may include bicomponent fibers.

Summary of Invention

Technical Problem

A task of the present invention is to provide a fiber structure for use in mattresses for bedding, a bedspread and other bedding articles, seats for various types of vehicles, furniture cushions, and the like, wherein the fiber structure has excellent interlaminar peel strength and has an unnoticeable fold when the fiber structure is bent.

Solution to Problem

The present inventor has conducted extensive and intensive studies with a view toward achieving the above task. As a result, the above-mentioned problems are solved by the invention which satisfies the requirements shown below, and the present invention has been completed.

[1]. A fiber structure including crimped staple fibers and heat-bonding conjugate staple fibers mixed in a weight ratio of 90/10 to 10/90, the heat-bonding conjugate staple fibers having, as a heat-bonding component disposed on a surface thereof, a thermoplastic resin having a melting point lower by 40°C or more than that of a thermoplastic resin constituting the crimped staple fibers,
the fiber structure having scattered fixing points in which the heat-bonding conjugate staple fibers are heat-fused and intersect together and/or scattered fixing points in which the heat-bonding conjugate staple fibers and the crimped staple fibers are heat-fused and intersect together,
the fiber structure having a thickness of 30 mm or more and a density of 10 kg/m$^3$ or more,
the fiber structure having a laminated structure of three or more layers in at least a thicknesswise direction, wherein a hardness ratio between an intermediate layer portion and a surface layer portion defined when the fiber structure is equally divided into three portions in the thicknesswise direction of the fiber structure is 0.70 to 1.10.
[2]. The fiber structure according to item [1] above, wherein the crimped staple fibers constituting the fiber structure are polyester fibers.
[3]. The fiber structure according to item [1] or [2] above, wherein the crimped staple fibers have a single fiber diameter in the range of 9 to 100 $\mu$m, and the heat-bonding conjugate staple fibers have a single fiber diameter in the range of 15 to 50 $\mu$m.
[4]. The fiber structure according to any one of items [1] to [3] above, wherein the thickness of the fiber structure is in the range of 40 to 300 mm.
[5]. The fiber structure according to any one of items [1] to [4] above, wherein the density of the fiber structure is in the range of 15 to 70 kg/m$^3$.
[6]. The fiber structure according to any one of items [1] to [5] above, which has an interlaminar peel strength of 5.0 N/50 mm or more.
[7]. The fiber structure according to any one of items [1] to [6] above, which contains, in at least part of the fiber structure, a fiber structure in which the fibers used are arranged in the thicknesswise direction of the fiber structure .
[8]. The fiber structure according to any one of items [1] to [7] above, which has in the fiber structure a laminated portion of a fiber structure in which the staple fibers are arranged in the thicknesswise direction of the fiber structure and a fiber structure in which the staple fibers are arranged in the direction perpendicular to the thicknesswise direction of the fiber structure.
[9]. A method for producing a fiber structure, comprising: mixing crimped staple fibers and heat-bonding conjugate staple fibers in a weight ratio of 90/10 to 10/90 to obtain nonwoven fabric, wherein the heat-bonding conjugate staple fibers have, as a heat-bonding component disposed on the surface thereof, a thermoplastic resin having a melting point lower by 40°C or more than that of a thermoplastic resin constituting the crimped staple fibers; then providing one sheet of the nonwoven fabric or laminating two or more sheets of the nonwoven fabric; and subjecting the one sheet of the nonwoven fabric or the resultant nonwoven fabric laminate to compression molding using a mold to produce a fiber structure having a thickness of 30 mm or more and a density of 10 kg/m$^3$ or more, wherein, after the compression molding, a first heating treatment is conducted, then a vacuum treatment is conducted, and further a second heating treatment is conducted.
[10]. The method for producing a fiber structure according to item [9] above, wherein at least one of the first heating treatment and the second heating treatment is a wet heat treatment.
[11]. The method for producing a fiber structure according to item [9] or [10] above, wherein, after the compression molding, and before conducting the first heating treatment, a vacuum treatment is conducted.

The above-mentioned fiber structure has excellent cushioning properties and excellent moldability such that the structure can be satisfactorily molded into an uneven complicated shape, and therefore can be advantageously used in seats for various types of vehicles, and furniture, such as a sofa. Further, when used in a mattress for bedding (such as a bed mattress) or the like, the fiber structure exhibits excellent cushioning properties and has an unnoticeable fold when being bent, and therefore can be advantageously used not only in general bed mattresses but also in nursing care bed mattresses which are possibly used in the form of being gently folded. Moreover, even when the fiber structure is repeatedly washed and dried, the cushioning properties and bending feeling level do not change, and therefore the fiber structure can be cleanly used for a long term while maintaining the same comfortable feeling as given just after purchased.

Advantageous Effects of Invention

In the present invention, there can be provided a fiber structure which has an unnoticeable fold when the fiber structure is bent, and which has excellent interlaminar peel strength and is suitable for applications, such as mattresses for bedding, a bedspread and other bedding articles, seats for various types of vehicles, and furniture cushions. More specifically, there can be provided a fiber structure which is advantageous in that a whole body of a user is appropriately buried in a fiber mattress of the fiber structure, and it is easy to shift sleeping positions on the fiber mattress, in that the fiber mattress has cushioning feeling free of bottom touching feeling such that a user feels hardness of the bottom surface, in that the fiber structure has an unnoticeable fold even when being bent, and therefore a person who is lying on the fiber structure feels comfortable even in a state such that the person is lying on the back with the upper part of the body at an angle (backrest sitting position), and in that the fiber structure has excellent moldability such that it can be advantageously molded into a complicated shape, such as an uneven form. Further, in the invention, there can be provided a fiber structure which is unlikely to be changed in the above properties even when the fiber structure is repeatedly washed and dried. Furthermore, in the invention, there can also be provided a suitable method for producing the same.

Brief Description of Drawings

Fig. 1 is a diagrammatic view for illustrating a method for measuring a parameter T/W which indicates the state of arrangement of staple fibers in a fiber structure.
Fig. 2 is a view diagrammatically showing an example of the fiber structure of the invention.
Fig. 3 is a view diagrammatically showing another example of the fiber structure of the invention, which is other than that of Fig. 2 (embodiment in Example 4).
Fig. 4 is a view diagrammatically showing still another example of the fiber structure of the invention, which is other than that of Figs. 2 and 3 (embodiment in Example 10).
Fig. 5 is a diagrammatic view showing a heating treatment after compression molding in a process for producing the fiber structure of the invention.
Fig. 6 is a diagrammatic view showing how to bend the fiber structure of the invention for evaluating bending feeling.
Fig. 7 is a view showing an example of appropriate sampling and an example of inappropriate sampling for taking a sample for peel strength measurement from the fiber structure of the invention.
Fig. 8 is a diagrammatic view showing the shape of an aluminum mold having an uneven form used in evaluation for moldability.
Fig. 9 is a diagrammatic view showing the shapes of fiber mattresses of Levels 1 to 3 in evaluation for moldability.

Description of Embodiments

Hereinbelow, an embodiment of the present invention will be described in detail.

(Crimped staple fibers)

With respect to the crimped staple fibers used in the invention, natural fibers, such as cotton or wool, inorganic fibers, such as carbon fibers, cellulose fibers, synthetic fibers, such as polyamide, aramid, polyolefin, polyester, polysulfone, or polyether ketone fiber, or the like may be used. Further, recycled fibers of the above fibers called "zatsuwata" or "hanmou" in Japanese, and the like may also be used. Especially, from the viewpoints of the handling properties and ease of recycling, synthetic fibers are preferred. Further, the above-mentioned crimped staple fibers may be non-elastic crimped staple fibers. Particularly, more preferred are polyester fibers, such as polyethylene terephthalate, polytrimethylene terephthalate, polybutylene terephthalate, polyhexamethylene terephthalate, poly-1,4-dimethylcyclohexane terephthalate, polyethylene naphthalate, polytrimethylene naphthalate, polybutylene naphthalate, polypivalolactone, polylactic acid (PLA), and stereocomplex polylactic acid. Further, in addition to polyester fibers, preferred examples include staple fibers comprising a polyolefin homopolymer or a copolymer of various olefins and mixed fibers (mixtures) of the staple fibers, and conjugate staple fibers comprising two or more of the above-mentioned thermoplastic resin components. With respect to the conjugate morphology of the conjugate fiber, any of a core-sheath type conjugate fiber, a side-by-side type conjugate fiber, and an island-in-sea type conjugate fiber may be employed. In the thermoplastic resin, if necessary, a colorant, various stabilizers, an ultraviolet light absorber, a thickening and branching agent, a matting agent, other various improvers, or the like may be incorporated. Of these staple fibers, from the viewpoints of the ease of recycling, fiber forming properties and the like, staple fibers comprising a polyalkylene terephthalate or polyalkylene naphthalate are preferred, and staple fibers comprising polyethylene terephthalate are especially preferred.

With respect to the crimped staple fibers, as examples of the method for applying crimps, there can be mentioned the following methods . A first method is in which a conjugate fiber formed by putting together side by side thermoplastic resins having different heat shrinks is spun by a melt spinning method, and cooled by anisotropic cooling to apply crimps in a spiral form so that the number of crimps becomes 3 to 40/2.54 cm, preferably 7 to 15/2.54 cm. A second one is a method of applying mechanical crimps using a press crimper generally used so that the number of crimps becomes the above-mentioned value. Other various methods may be used, but, from the viewpoints of the bulkiness, production cost and the like, a method of applying mechanical crimps is preferably employed.

The crimped staple fibers preferably have a single fiber diameter in the range of 9 to 100 $\mu$m. When the single fiber diameter is smaller than 9 $\mu$m, there is a danger that a satisfactory stiffness cannot be obtained, and further the production of nonwoven fabric is difficult. Conversely, when the single fiber diameter is larger than 100 $\mu$m, the resultant fiber structure is so hard that the cushioning feeling is poor. The single fiber diameter is more preferably in the range of 10 to 50 $\mu$m, further preferably in the range of 20 to 40 $\mu$m.

The single fiber cross-sectional shape of the crimped staple fibers (cross-section taken along the direction perpendicular to the fiber axis) may be a general circular cross-section, and may be a cross-section of an irregular shape, such as a triangle, a tetragon, a flattened ellipse, a star shape, or the above cross-sectional shape having therein one or two or more pores. When the single fiber cross-sectional shape is an irregular shape, the diameter of a circumcircle of the single fiber is used as the single fiber diameter. Further, when the single fiber cross-sectional shape is a circular hollow cross-section, an outer diameter dimension is measured.

Hollow fibers having therein one or two or more pores, for example, having a circular hollow cross-section are preferably used as the crimped staple fibers from the viewpoint of obtaining the fiber structure having a reduced weight and excellent heat retaining properties. Specifically, the fiber structure produced using hollow fibers as the crimped staple fibers can be reduced in weight due to the hollow part, as compared to a fiber structure using crimped staple fibers having the same diameter. Further, by virtue of air contained in the hollow part, the fiber structure having excellent heat retaining properties can be obtained. Furthermore, by using the hollow fibers as the crimped staple fibers, the fixing points and fixing areas formed from the crimped staple fibers together with the heat-bonding conjugate staple fibers can be increased, as compared to those formed when using crimped staple fibers having the same denier, and therefore the density, hardness and the like of the fiber structure can be more flexibly controlled by appropriately changing the heating conditions for the production and the like.

The crimped staple fibers preferably have a fiber length in the range of 30 to 150 mm. When the fiber length of the crimped staple fibers is smaller than 30 mm, there is a danger that the fiber structure having a satisfactory stiffness cannot be obtained. Conversely, when the fiber length is larger than 150 mm, there is a danger that the process stability in the production process for the crimped staple fibers deteriorates. The fiber length of the crimped staple fibers is more preferably in the range of 40 to 80 mm, further preferably in the range of 50 to 75 mm.

(Heat-bonding conjugate staple fibers)

Next, it is important that the heat-bonding component of the heat-bonding conjugate staple fibers has a melting point lower by 40°C or more than that of the thermoplastic resin component constituting the above-mentioned crimped staple fibers. When the difference in melting point between the heat-bonding component and the thermoplastic resin of the crimped staple fibers is less than 40°C, there are disadvantages not only in that the heat-bonding properties are unsatisfactory, but also in that the fiber structure has no stiffness (elasticity) and is difficult to handle. Further, it is necessary to precisely control the heating treatment temperature, so that the productivity becomes poor. The heat-bonding component of the heat-bonding conjugate staple fibers preferably has a melting point lower by 60°C or more, more preferably a melting point lower by 80°C or more, most preferably a melting point lower by 100°C or more than that of the thermoplastic resin component constituting the crimped staple fibers. By subjecting the heat-bonding conjugate staple fibers having the heat-bonding component having such a difference in melting point disposed on the surface thereof to heating treatment, a structure can be obtained such that fixing points in which the heat-bonding conjugate staple fibers are heat-fused and fixing points in which the heat-bonding conjugate staple fibers and the crimped staple fibers are heat-fused are scattered. Further, by virtue of the heat-bonding component disposed on the surface of the staple fibers, the fixing points and fixing areas can be increased according to the degree of the heating treatment, and thus it is easy to control the density and hardness of the fiber structure, making it possible to improve the productivity of the fiber structure. When a plurality of thermoplastic resin components constitute the crimped staple fibers, the thermoplastic resin constituting the surface of the crimped staple fibers is compared with the heat-bonding component, and, when a plurality of thermoplastic resins constitute the surface of the crimped staple fibers, the thermoplastic resin having the lowest melting point is compared with the heat-bonding component.

Examples of thermoplastic resins disposed as the heat-bonding component of the heat-bonding conjugate staple fibers include polyurethane elastomers, polyester elastomers, non-elastic polyester homopolymers and copolymers thereof, polyolefin homopolymers and copolymers thereof, and polyvinyl alcohol polymers.

The polyurethane elastomer is a thermoplastic resin obtained by a reaction of a low melting-point polyol having a number average molecular weight of about 500 to 6,000, an organic diisocyanate having a molecular weight of 500 or less, and a chain extender having a molecular weight of 500 or less. With respect to the above compounds, examples of low melting-point polyols having a number average molecular weight of about 500 to 6,000 include a dihydroxy polyether, a dihydroxy polyester, a dihydroxy polycarbonate, and a dihydroxy polyester amide. Examples of organic diisocyanates having a molecular weight of 500 or less include p,p'-diphenylmethane diisocyanate, tolylene diisocyanate, isophorone diisocyanate, hydrogenated diphenylmethane diisocyanate, xylylene diisocyanate, 2,6-diisocyanate methyl caproate, and hexamethylene diisocyanate. Examples of chain extenders having a molecular weight of 500 or less include glycol, an amino alcohol, and a triol.

Among these thermoplastic resins, especially preferred are low melting-point polyols, such as polytetramethylene glycol, and polyurethane using poly-ε-caprolactone or polybutylene adipate. Examples of organic diisocyanate compounds used in this case include compounds obtained by replacing the dihydroxyl group of p,p'-bishydroxyethoxybenzene or 1,4-butanediol by an isocyanate group.

Further, the polyester elastomer is a polyether ester copolymer obtained by copolymerizing a thermoplastic polyester as a hard segment with a poly (alkylene oxide) glycol as a soft segment. More specifically, at least one compound of dicarboxylic acid selected from the group consisting of aromatic dicarboxylic acids, such as terephthalic acid, isophthalic acid, phthalic acid, naphthalene-2,6-dicarboxylic acid, naphthalene-2,7-dicarboxylic acid, naphthalene-1,5-dicarboxylic acid, and diphenyl-4,4'-dicarboxylic acid, alicyclic dicarboxylic acids, such as 1,4-cyclohexanedicarboxylic acid, tricyclodecanedicarboxylic acid, and adamantanedicarboxylic acid, aliphatic dicarboxylic acids, such as oxalic acid, malonic acid, succinic acid, glutaric acid, adipic acid, suberic acid, sebacic acid, dodecanedicarboxylic acid, and dimer acid, and ester-forming derivatives thereof and the like is preferably used as a dicarboxylic acid component constituting the thermoplastic polyester. Further, at least one compound of diol component selected from the group consisting of aliphatic diols, such as 1,4-butanediol, ethylene glycol, trimethylene glycol, tetramethylene glycol, pentamethylene glycol, hexamethylene glycol neopentyl glycol, and decamethylene glycol, alicyclic diols, such as 1,1-cyclohexanedimethanol, 1,4-cyclohexanedimethanol, and tricyclodecanemethanol, and ester-forming derivatives thereof and the like is preferably used as a diol component (dihydroxy compound component) constituting the thermoplastic polyester. Further, at least one compound of dicarboxylic acid selected from the group consisting of poly(alkylene oxide) glycols having a number average molecular weight of about 400 to 5,000, such as polyethylene glycol, poly(1,2- and 1,3-polypropylene oxide) glycol, poly (tetramethylene oxide) glycol, a copolymer of ethylene oxide and propylene oxide, and a copolymer of ethylene oxide and tetrahydrofuran and the like, is preferably used as a poly (alkylene oxide) glycol forming the soft component. Of these compounds, a terpolymer obtained by polymerization conducted by a method that a person skilled in the art generally performs is preferably used as the polyester elastomer.

Particularly, from the viewpoints of the bonding properties, temperature properties, and strength, preferred is a block-copolymerized polyether ester having polybutylene terephthalate or polyhexamethylene terephthalate as a hard component and polyoxybutylene glycol (polytetramethylene glycol) as a soft segment. In this case, the polyester portion constituting the hard segment is polybutylene terephthalate having terephthalic acid as a main acid component and a butylene glycol component as a main diol component. A part (generally 30 mol% or less) of the acid component may be substituted with another dicarboxylic acid component or oxycarboxylic acid component, and, similarly, a part (generally 30 mol% or less) of the glycol component may be substituted with a diol component other than the butylene glycol component. Further, the polyether portion constituting the soft segment may be a polyether substituted with a dioxy component other than butylene glycol.

With respect to the non-elastic copolymerized polyester homopolymer and a copolymer thereof, it is preferred to use a polyester which is obtained by copolymerizing an aliphatic dicarboxylic acid, such as succinic acid, glutaric acid, adipic acid, suberic acid, or sebacic acid, an aromatic dicarboxylic acid, such as phthalic acid, isophthalic acid, terephthalic acid, or naphthalenedicarboxylic acid, an alicyclic dicarboxylic acid, such as hexahydroterephthalic acid, hexahydroisophthalic acid, or tricyclodecanedicarboxylic acid, and an aliphatic or alicyclic diol, such as diethylene glycol, trimethylene glycol, 1,2-propylene glycol, tetramethylene glycol, polyethylene glycol, or paraxylene glycol, in a predetermined ratio. Further, there can be mentioned copolymerized esters having, if desired, further added an oxy-acid, such as parahydroxybenzoic acid, and the like. Specifically, for example, a polyester having copolymerized terephthalic acid and isophthalic acid in a ratio of 30/70 to 70/30 mol% as a dicarboxylic acid component and ethylene glycol and diethylene glycol in a ratio of 90/10 to 10/90 mol% as a diol component can be preferably used.

Further, examples of polyolefin polymers include low-density polyethylene, high-density polyethylene, polypropylene, polystyrene, polyacrylic acid, polymethyl methacrylate, polyvinyl acetate, and polyolefins obtained by modifying the above polymers.

Among the above-mentioned heat-bonding components, a copolymerized polyester polymer is especially preferred. In the above-mentioned thermoplastic resin, if necessary, various stabilizers, an ultraviolet light absorber, a thickening and branching agent, a matting agent, a colorant, other various improvers, or the like may be incorporated.

In the heat-bonding conjugate staple fibers, preferred examples of the other side component of the heat-bonding component include the above-mentioned non-elastic polyesters. More specifically, there can be mentioned polyethylene terephthalate, polytrimethylene terephthalate, polytetramethylene terephthalate (polybutylene terephthalate), polyethylene naphthalate, polytrimethylene naphthalate, and polytetramethylene naphthalate. In this case, it is preferred that the thermoplastic resin constituting the heat-bonding component occupies at least 1/2 of the surface area of the heat-bonding conjugate staple fibers. With respect to the weight ratio, the heat-bonding component and the other side component are preferably disposed in a conjugate ratio in the range of 90/10 to 10/90, more preferably disposed in a conjugate ratio in the range of 70/30 to 30/70, further preferably in the range of 60/40 to 40/60. When the conjugate ratio is in the above range, the resultant fibers have a strength, a modulus, and flexing properties, and a heating treatment for the fibers makes it possible to form fixing points having satisfactory strength in which the heat-bonding conjugate staple fibers are heat-fused or the heat-bonding conjugate staple fibers and the crimped staple fibers are heat-fused. With respect to the morphology of the heat-bonding conjugate staple fibers, there is no particular limitation, but preferred is a conjugate fiber having the heat-bonding component and the other side component and being of a side-by-side type, a core-sheath type, or an island-in-sea type, and more preferred is a conjugate fiber of a core-sheath type. In the heat-bonding conjugate staple fibers of a core-sheath type, the heat-bonding component forms a sheath portion and the other side component forms a core portion, and the core portion may be in a concentric form (concentric core-sheath type conjugate staple fibers) or in an eccentric form (eccentric core-sheath type conjugate staple fibers). The conjugate staple fibers employing a conjugate morphology of a core-sheath type and having the heat-bonding component disposed in the sheath portion are preferred because a heating treatment for the conjugate staple fibers makes it possible to form fixing points having satisfactory strength in which the conjugate staple fibers are heat-fused in a state that the heat-bonding conjugate staple fibers intersect with each other and/or in a state that the heat-bonding conjugate staple fibers intersect with the crimped staple fibers.

The heat-bonding conjugate staple fibers preferably have a single fiber diameter in the range of 15 to 50 μm, more preferably in the range of 20 to 40 μm, further preferably in the range of 24 to 30 μm. The heat-bonding conjugate staple fibers are preferably cut into ones having a fiber length of 3 to 100 mm, more preferably in the range of 10 to 60 mm.

(Fiber structure)

In the invention, the above-mentioned crimped staple fibers and heat-bonding conjugate staple fibers are mixed, and subjected to opening using a carding machine, and the webs obtained by opening are laminated, and further the resultant layered product is subjected to heating treatment, thus forming a fiber structure wherein fixing points in which the heat-bonding conjugate staple fibers are heat-fused in a state that the heat-bonding conjugate staple fibers intersect with each other and/or fixing points in which the heat-bonding conjugate staple fibers and the crimped staple fibers are heat-fused in a state that the heat-bonding conjugate staple fibers intersect with the crimped staple fibers are scattered. In the formed fiber structure, it is more preferred that fixing points in which the heat-bonding conjugate staple fibers are heat-fused in a state that the heat-bonding conjugate staple fibers intersect with each other and fixing points in which the heat-bonding conjugate staple fibers and the crimped staple fibers are heat-fused in a state that the heat-bonding conjugate staple fibers intersect with the crimped staple fibers are scattered.

In this case, the weight ratio of the crimped staple fibers and the heat-bonding conjugate staple fibers is 90/10 to 10/90. When the weight ratio of the crimped staple fibers and the heat-bonding conjugate staple fibers is smaller than this range, it is likely that the number of fixing points is markedly reduced, so that the fiber structure has no stiffness (elasticity). Further, when the weight ratio is small, it is likely that the uniformity is unsatisfactory such that cracks are generated in the surface of the fiber structure, so that the appearance is poor. On the other hand, when the ratio of the heat-bonding conjugate staple fibers is larger than the above range, the number of the fixing points is considerably increased, so that the handling properties in the heating treatment step become poor. The weight ratio of the crimped staple fibers and the heat-bonding conjugate staple fibers is more preferably 80/20 to 20/80, further preferably 65/35 to 35/65. The thickness of the fiber structure of the invention is preferably 30 mm or more, more preferably 40 to 300 mm, more preferably 50 to 250 mm, further preferably 80 to 120 mm. When the thickness of the fiber structure is too small, it is likely that the fiber structure is unsatisfactory in cushioning properties, or is easily crushed when a load is repeatedly applied to the fiber structure. On the other hand, when the thickness of the fiber structure is too large, there is a disadvantage in that the fiber structure is difficult to handle, in that repulsion caused after applying a load to the fiber structure is so large that a human body is injured or an object is damaged, in that it is difficult to bend the fiber structure even at an obtuse angle, or in that the productivity is lowered. It is necessary that the density of the fiber structure be 10 kg/m$^3$ or more, and the density of the fiber structure is preferably 15 to 70 kg/m$^3$, more preferably 20 to 50 kg/m$^3$, further preferably 30 to 45 kg/m$^3$. When the density of the fiber structure is too low, it is likely that the fiber structure causes marked bottom touching feeling, and the fiber structure is too soft and further is easily crushed when a load is repeatedly applied to the fiber structure. On the other hand, when the density of the fiber structure is too high, it is likely that the hardness of the whole of the fiber structure is so high that excellent cushioning properties cannot be obtained, and further the repeated durability for cushioning properties becomes poor.

Further, the fiber structure of the invention has a laminated structure of three layers or more, preferably 4 to 12 layers, more preferably 5 to 10 layers, especially preferably 6 to 8 layers, in at least the thicknesswise direction of the fiber structure. By virtue of having a laminated structure, the density spots and hardness spots which are possibly generated in the production process for the fiber structure can be prevented from affecting spots in the whole of the fiber structure, as compared to those in the fiber structure produced from single-layer nonwovenfabric. Further, as mentioned below, by changing the thickness, density, hardness, and arrangement direction of the staple fibers for each of the laminated layers according to the purpose of the use of the fiber structure, it is easy to control the thickness and density of the product of the fiber structure. As a result, the thickness, density, and hardness of the fiber structure can be positively changed or controlled according to the purpose of the use. Each layer is formed from a fiber cushioning material (nonwoven fabric sheet) as mentioned below, but, due to the features of the method in the process for producing the nonwoven fabric sheet, in the surface layer portion and the back surface layer portion of the nonwoven fabric sheet, the staple fibers can be densely arranged, as compared to those in the inner layer portion of the nonwoven fabric sheet. By checking the presence or absence of the portion of the fiber structure in which the staple fibers are densely arranged or the number thereof by examination using an optical microscope or a scanning electron microscope or the like at an appropriate magnification, the boundary line (boundary surface) in the laminated structure can be observed and specified.

Further, according to the invention, the fiber structure having a thickness of 30 mm or more and a density of 10 kg/m$^3$ or more needs to have a hardness ratio of 0.70 to 1.10 between an intermediate portion and a surface layer portion defined when the fiber structure is equally divided into three portions in the thicknesswise direction of the fiber structure. When the fiber structure is equally divided into three portions in the thicknesswise direction of the fiber structure, the hardness of the surface layer portion in this case does not indicate the hardness of the surface layer portion on the side with which the intermediate layer portion is in contact but indicates the hardness of the surface layer portion on the opposite side. That is, the hardness of the surface layer portion indicates the hardness of the surface on the side which is exposed as the surface of the fiber structure. The fiber structure having a thickness of 30 mm or more and a density of 10 kg/m$^3$ or more preferably has a hardness ratio of 0.72 to 0.95 or more between the intermediate and surface layer portions defined when the fiber structure is equally divided into three portions in the thicknesswise direction of the fiber structure. In the case where the fiber structure is used as a cushioning material, on the assumption that the fiber structure is equally divided into three parts in the thicknesswise direction of the fiber structure, when the hardness ratio of the intermediate layer portion and the surface layer portion is less than 0.60, in the cushioning material used as a mattress for bedding, particularly a waist part of a body and then a part of shoulders and the like are considerably buried in the mattress. Therefore, when the person lying on the mattress and the mattress are viewed from the side, the body of the person lying on the mattress is sometimes seen bent in a V-shape or W-shape on the mattress. As a result, the person lying on the mattress feels uncomfortable in bed, and possibly has a low back pain. Further, in the case where the fiber structure is used to form a nursing care bed mattress, in a bed having a function such that the upper part of the body of the person lying on the bed is lifted at an angle, a fold like a fold generated when folding corrugated board can be generated from the intermediate layer portion as a starting point. When the bed mattress having such a fold is used, it is likely that the person lying on the bed feels uncomfortable and the use of the bed is difficult.

Further, in producing the fiber structure in the invention, the structure of the fiber cushioning material (nonwoven fabric sheet), which is an intermediate product in the process for producing the fiber structure, is also important. Such a fiber cushioning material is obtained, as described below, by mixing crimped staple fibers and heat-bonding conjugate staple fibers and subjecting the mixed fibers to heating treatment. Particularly, lamination of the fiber cushioning materials preferably makes it easy to control the thickness and density of the fiber structure as a product. With respect to variation on the lamination of the fiber cushioning materials, the fiber cushioning materials having the same physical properties may be laminated, or two or more types of the fiber cushioning materials having different physical properties may be laminated. Further, in laminating the fiber cushioning materials, the fiber cushioning materials having similar arrangement of the fibers and having changed the thickness, fiber areal weight, density, or hardness may be used. By using ,in at least part of the fiber structure, the fiber cushioning material which contains a portion of a fiber structure in which the fibers used are arranged in the thicknesswise direction of the fiber structure, namely, using the fiber cushioning material in which the staple fibers are arranged in the thicknesswise direction of the fiber structure, it is possible to improve the pressure resistance distribution, cushioning feeling, and air permeability. More preferred is an embodiment having a laminated portion of a fiber structure in which the staple fibers are arranged in the thicknesswise direction of the fiber structure and a fiber structure in which the staple fibers are arranged in the direction perpendicular to the thicknesswise direction.

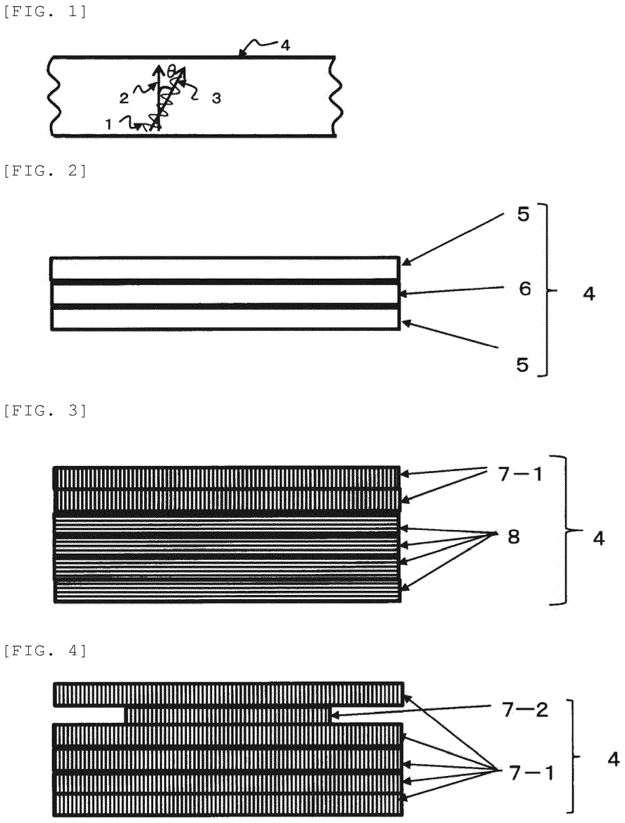

The state in which the staple fibers are arranged in the thicknesswise direction of the fiber structure indicates the following case. First, the fiber which is arranged in parallel to the thicknesswise direction of the fiber cushioning material (or which is arranged in the thicknesswise direction) is a fiber of which an angle $\theta$ shown in Fig. 1 satisfies the requirement: $0° \leq \theta \leq 45°$. Meanwhile, the fiber which is arranged in the direction perpendicular to the thicknesswise direction of the fiber cushioning material is a fiber of which an angle $\theta$ shown in Fig. 1 satisfies the requirement: $45° < \theta \leq 90°$. In Fig. 1, a curved line of a wave form indicates a heat-bonding conjugate staple fiber or crimped staple fiber. As a specific measurement and evaluation method, there can be mentioned the following method. The fiber structure is cut in the thicknesswise direction, and, with respect to the resultant cross-section, the total number of the crimped staple fibers and heat-bonding conjugate staple fibers arranged in parallel to the thicknesswise direction ($0° \leq \theta \leq 45°$ in Fig. 1) is taken as T, and the total number of the crimped staple fibers and heat-bonding conjugate staple fibers arranged in the direction perpendicular to the thicknesswise direction of the fiber structure ($45° < \theta \leq 90°$ in Fig. 1) is taken as W. From these values, T/W was calculated. In the measurement of the total number of staple fibers, with respect to each of arbitrary 10 sites, 30 fibers are examined under a transmission optical microscope, and the number of staple fibers is measured and the total number is calculated. In this case, in the invention, the case where T/W is 1.25 or more indicates that the staple fibers are arranged in the thicknesswise direction of the fiber structure, and the case where T/W is 0.0 to 0.80 indicates that the staple fibers are arranged in the direction perpendicular to the thicknesswise direction of the fiber structure. In the invention, in the portion in which the staple fibers are arranged in the thicknesswise direction of the fiber structure, the T/W value is preferably 1.28 or more, more preferably 1.30 or more, further more preferably 1.40 or more. When the T/W is 1.3 or more, the fiber cushioning material is likely to exhibit excellent cushioning properties and elasticity and to be improved in damp feeling reduction effect, and such a fiber cushioning material is a preferred embodiment in the bed mattress application.

Further, a preferred embodiment is such that, for controlling the cushioning properties and the like, fiber cushioning materials (nonwoven fabric sheets) having different physical properties, such as a density, a hardness, and a size, are combined, and the fiber cushioning materials are laminated in an appropriate order according to the purpose. Specifically, for controlling physical properties of the fiber structure, such as a density, a hardness, and a thickness, a method can be employed in which the fiber structure is produced using the appropriate number of two or more types of fiber cushioning materials which are produced in a way that the size, diameter, length, or type (a natural fiber, an inorganic fiber, or a synthetic fiber, or, in the case of a synthetic fiber, the type of the thermoplastic resin constituting the synthetic fiber) of the crimped staple fibers, the size, diameter, length, or type (types of the thermoplastic resins of both components) of the heat-bonding staple fibers, the mixing ratio of the crimped staple fibers and the heat-bonding staple fibers, and the like are changed.

Further, preferred is the fiber structure which is produced by laminating a fiber cushioning material in which the staple fibers are arranged in the thicknesswise direction of the fiber cushioning material, and a cushioning material in which the staple fibers are arranged in the direction perpendicular to the thicknesswise direction of the fiber cushioning material. Furthermore, preferred is the fiber structure wherein the fiber cushioning material in which the staple fibers are arranged in the thicknesswise direction of the fiber cushioning material is disposed on the upper surface that a body contacts, or the fiber structure wherein a fiber cushioning material having different physical properties is further disposed on the position other than the above-mentioned upper surface. The fiber cushioning material having different physical properties means a fiber cushioning material having physical properties such that at least one of the size, diameter, length, and type (a natural fiber, an inorganic fiber, or a synthetic fiber, or, in the case of a synthetic fiber, the type of the thermoplastic resin constituting the synthetic fiber) of the staple fibers constituting the cushioning material (crimped staple fibers or heat-bonding conjugate staple fibers), and the mixing ratio of the crimped staple fibers and the heat-bonding conjugate staple fibers, fiber areal weight, thickness, density, and arrangement of the staple fibers in the fiber cushioning material is different from that of another fiber cushioning material. Further, preferred is the fiber structure wherein fiber cushioning materials having the same physical properties are respectively disposed on the surface side and the back surface side of the fiber structure, and a fiber cushioning material having different physical properties is disposed in the inner portion between the surface side and the back surface side.

Another preferred embodiment is such that, if necessary, the number of the laminated fiber cushioning materials is changed not in the whole of the fiber structure but in part of the fiber structure. Specifically, fiber cushioning materials having different sizes are laminated. It is preferred that one or two or more fiber cushioning materials constituting the fiber structure and a fiber cushioning material having a smaller size are laminated. In the use as a bed mattress, an example of a preferred embodiment is such that many fiber cushioning materials having a smaller size are laminated on the upper surface that a body contacts at positions corresponding to positions of shoulders and/or a waist of a body, to which a larger load than that for other places is applied. Diagrammatic views of examples of the fiber structures produced using the above-mentioned fiber cushioning materials having different physical properties are shown in Figs. 3 and 4.

In the accompanying drawings in the specification, Fig. 2 shows a diagrammatic view of the fiber structure of the invention. In a fiber structure 4, a surface layer portion 5 constitutes the portion corresponding to 1/3 of the whole thickness of the fiber structure in the direction from each of the surface side and the back side toward the inside of the fiber structure, and an intermediate layer portion 6 is present between the surface layer portions . The surface layer portions and/or the intermediate layer portion may be individually comprised of one sheet of or two or more sheets of the fiber cushioning material (nonwoven fabric sheet). Meanwhile, like in the case where the fiber structure is comprised of less than two sheets of the fiber cushioning material (nonwoven fabric sheet), or the case where the fiber structure is comprised of the fiber cushioning materials having almost the same thickness, the number of which is not a multiple of 3, the boundary surface between the surface layer portion 5 and the intermediate layer portion 6 may be present on the plane perpendicular to the thicknesswise direction of a specific one sheet of fiber cushioning material (nonwoven fabric sheet).

Fig. 3 shows a diagrammatic view of the fiber structure obtained in Example 4 described below, wherein two nonwoven fabric sheets 7-1 in which the fibers stand upright in the thicknesswise direction are laminated, and, as a lower layer, four nonwoven fabric sheets 8 in which the fibers are arranged in the direction perpendicular to the thicknesswise direction are laminated. In this fiber structure, the surface side (upper side in Fig. 3; the surface on which the nonwoven fabric sheet 7-1 is present) and the back surface side (lower side in Fig. 3; the surface on which the nonwoven fabric sheet 8 is present) are different in hardness, and therefore, for example, when used as a bed mattress, the fiber structure can be used as a reversible mattress according to the desired bed mattress hardness of the individual.

In Fig. 4, four nonwoven fabric sheets 7-1 in which the fibers stand upright in the thicknesswise direction are laminated, and one nonwoven fabric sheet 7-2, which has a size different from that of the nonwoven fabric sheet 7-1, in which the fibers stand upright in the thicknesswise direction, is laminated on the above laminate. The fiber structure has a slightly smaller nonwoven fabric sheet (7-2) laminated on the middle portion of the whole width and the whole length of the fiber structure (reference numeral 7-2 in Fig. 4). One nonwoven fabric sheet 7-1 of an ordinary size is further laminated thereon and the resultant laminate is subjected to thermoforming to produce a fiber structure, and the diagrammatic view of the fiber structure is shown. This fiber structure indicates a diagrammatic view of the fiber structure obtained in Example 10 described below. In the case of such a fiber structure, one nonwoven fabric sheet 7-2 is further disposed on the part corresponding to a waist of a body, to which a large load is applied when used in the bed mattress application. Therefore, even when a large load is repeatedly applied to the middle portion of the fiber structure, the cushioning properties of the fiber structure can be maintained, making it possible to suppress generation of crushing or depression.

Further, when the fiber mattress is used for a long term and, if necessary, is washed, interlaminar peeling is likely to occur between the layers of the laminated fiber cushioning materials (nonwoven fabric sheets), and the fiber mattress cannot be used as a product of the bed mattress. Therefore, in the invention, the fiber structure preferably has an interlaminar peel strength of 5.0 N/50 mm or more, more preferably 8.0 to 30.0 N/50 mm, further preferably 10.0 to 28.0 N/50 mm, most preferably 11.0 to 25.0 N/50 mm. When the interlaminar peel strength is a predetermined value or more as mentioned above, the interlaminar strength of the fiber cushioning material is unlikely to be lowered by wear and tear caused due to a long-term use, irradiation with sunlight or lamplight, a washing operation, or the like. When the interlaminar strength is unlikely to be lowered, warpage or waviness does not occur without applying a load and the product can have a resistance to a long-term use.

(Method for producing the fiber structure)

Further, the fiber structure can be produced by laminating the fiber cushioning materials (nonwoven fabric sheets) obtained by the method described below and subjecting the resultant laminate to compression molding, conducting a first heating treatment, then conducting a vacuum treatment, and further conducting a second heating treatment.

As an example of the method for producing the fiber cushioning material, there can be mentioned the following method. Crimped staple fibers and heat-bonding conjugate staple fibers are mixed in a weight ratio of 90/10 to 10/90. Then, the fiber web obtained in the carding step is laminated by a cross-layer facility or the like arranged to be perpendicular to the thicknesswise direction. Then, the layered fiber web is introduced by a driving roller into a heat treatment apparatus, such as the apparatus shown in Fig. 2 of JP-A-2007-303831 (for example, as a commercially available apparatus, Struto facility, manufactured by Struto). Further, the layered fiber web is pushed by a heated roller disposed in the facility into a hot-air suction heat treatment machine set at a temperature equal to or higher than the melting point of the low melting-point thermoplastic resin constituting the heat-bonding component of the heat-bonding conjugate staple fibers, so that the fiber web is folded in an accordion form. By producing a fiber cushioning material from such a web folded in an accordion form, there can be obtained a fiber cushioning material in which the staple fibers in the web are arranged in the thicknesswise direction of the fiber cushioning material.

As another example of the method for producing the fiber cushioning material, there can be mentioned the following method. Fibers mixed in the same weight ratio as mentioned above are subjected to carding in the carding step, and the resultant webs are laminated by a cross-laid method, an air-laid method or the like. Then, the laminated web is subjected to heating treatment at a temperature equal to or higher than the melting point of the low melting-point thermoplastic resin constituting the heat-bonding component of the heat-bonding conjugate staple fibers, obtaining a fiber cushioning material in which the staple fibers are arranged in the direction perpendicular to the thicknesswise direction of the fiber cushioning material.

In producing a fiber structure after the fiber cushioning material is obtained by the above-mentioned method or the like, the fiber structure can be produced from the single fiber cushioning material, or can be produced by laminating a plurality of the fiber cushioning materials. In laminating the fiber cushioning materials, fiber cushioning materials having the same physical properties may be laminated, or two or more types of fiber cushioning materials having different physical properties may be laminated. Further, when producing the fiber structure of the invention, 3 or more fiber cushioning materials are preferably used, more preferably 4 to 12, further preferably 5 to 10, especially preferably 6 to 8 fiber cushioning materials are used. More specific laminate forms of the fiber cushioning materials that can be employed when producing the fiber structure of the invention are as described above.

Further, as a method for obtaining the fiber structure of the present invention, for example, there can be mentioned a method according the following procedure. Crimped staple fibers and heat-bonding conjugate staple fibers are first mixed in a weight ratio of 90/10 to 10/90 to obtain nonwoven fabric, wherein the heat-bonding conjugate staple fibers have as a heat-bonding component disposed on the surface thereof a thermoplastic resin having a melting point lower by 40°C or more than that of a thermoplastic resin constituting the crimped staple fibers. In producing the nonwoven fabric, staple fibers are subjected to opening using a carding machine or the like to obtain a fiber web, and the fiber web is laminated to obtain nonwoven fabric. The method for producing a fiber cushioning material (nonwoven fabric sheet) from the fiber web is as mentioned above. If necessary, in this stage, part of or all of the staple fibers constituting the fiber web may be bonded together. In the method for producing the fiber structure of the invention, subsequently, one sheet of or two or more sheets of the fiber cushioning material (nonwoven fabric sheet) are laminated and subjected to compression molding using a mold. In the compression molding, it is preferred that a first heating treatment is conducted, then a vacuum treatment is conducted, and further a second heating treatment is conducted. In the compression molding, a pressure of 5 kPa to 10 MPa can be applied to the fiber cushioning material. Further, in the method for producing the fiber structure, it is preferred that at least one of the first and second heating treatments is a wet heat treatment. Further, in the method for producing the fiber structure, it is preferred that, after the compression molding, and before conducting the first heating treatment, a vacuum treatment is conducted.

In the method for producing the fiber structure of the invention, the thermoplastic resin constituting the low melting-point heat-bonding component of the heat-bonding conjugate staple fibers constituting the fiber cushioning material is melted by hot air, wet heat or the like and fixed with the other heat-bonding conjugate staple fibers or crimped staple fibers, so that the shape of the fiber structure can be maintained. As can be seen from the fact that the fiber structure is used as a heat insulating material, the fiber structure has high heat insulation effect as a whole of the structure. Therefore, particularly, in the case of including the fiber structure produced using thin staple fibers, the fiber structure having a large thickness, the fiber structure having a high density, or the fiber structure in which the fibers are arranged in the thicknesswise direction, a method in which the fiber cushioning material (fiber structure before subjected to heating treatment) is vertically sandwiched between molds and subjected to molding has a disadvantage in that the heated air, steam, or the like introduced under atmospheric pressure is unlikely to reach the center portion of the fiber structure. In such a case, it is likely that a lot of time is required for replacing the air layer in the center portion of the fiber structure before being heated by the heated air layer added from the outside under atmospheric pressure. Alternatively, it is likely that the air layer cannot be completely replaced by another. Therefore, a heating treatment is conducted and then, the inside of the mold is subjected to vacuum treatment, and then another heating treatment is conducted, and thus the air in the center portion of the fiber structure after the first heating treatment can be first withdrawn. Subsequently, the heated air or steam can be introduced to the air layer in the center portion of the fiber structure, enabling uniform thermoforming processing for the whole of the fiber structure.

Further, when a wet heat treatment is conducted as a heat ing treatment method, the heating medium has a large heat capacity and the like, and uniform and high-speed thermoforming is possible, as compared to those achieved when conducting a dry heat treatment. From such a point of view, it is preferred that, in at least one of the first heating treatment and the second heating treatment, the heating treatment is conducted by a wet heat treatment. It is more preferred that the first and second heating treatments are conducted by a wet heat treatment. As a method for the wet heat treatment, there can be mentioned a method in which, for example, atmospheric-pressure or high-pressure steam at 90°C or higher, preferably 95°C or higher, more preferably 100°C or higher is introduced to the fiber cushioning material (fiber structure before subjected to heating treatment) vertically sandwiched between molds. Further, the frequency of a combination of the heating treatment and the vacuum treatment is not limited to twice, and the treatments may be conducted 3 times or more. By increasing the frequency of the treatments, the fiber structure having a high density and a high hardness can be produced. Further, preferred is a production method in which, if necessary, the heating treatment and vacuum treatment are repeated 3 times or more. Taking the productivity into consideration, the frequency is preferably 2 to 5 times.

Especially in the bed mattress application, when the density of the fiber structure is increased for improving the durability of the part corresponding to a waist of a body, the durability particularly sharply varies depending on the frequency of the treatments.

Further, when a vacuum treatment is conducted before conducting the first heating treatment, the unheated air in the center portion of the fiber cushioning material (nonwoven fabric sheet) before heated is removed to some extent, and then the heated heating medium is supplied to the center portion of the fiber cushioning material (nonwoven fabric sheet), and therefore the heating medium is likely to efficiently penetrate the center portion of the fiber cushioning material (nonwoven fabric sheet). Further, the vacuum treatment conducted after the heating treatment is preferred because the heated fiber cushioning material (nonwoven fabric sheet) can be more quickly cooled, and moisture can be removed when conducting a wet heat treatment using steam.

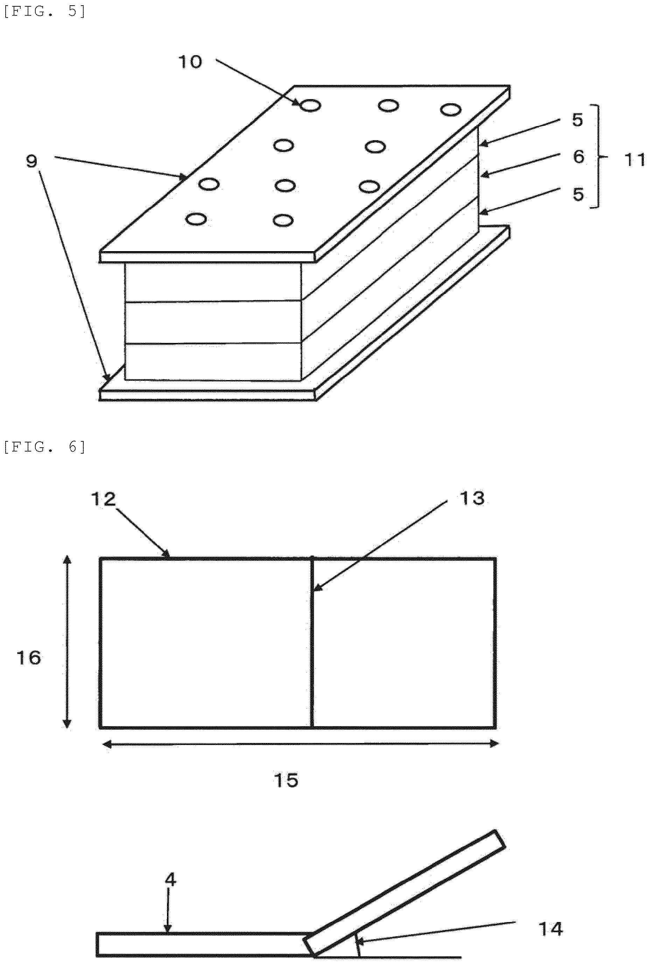

Further, with respect to preferred conditions for the heating treatment, the heating temperature in the heating step is the melting point of the thermoplastic resin constituting the heat-bonding component of the heat-bonding conjugate staple fibers to a temperature of (the melting point + 40°C), preferably a temperature of (the melting point + 1°C) to a temperature of (the melting point + 30°C), more preferably a temperature of (the melting point + 3°C) to a temperature of (the melting point + 20°C) . The heating time in the heating step is, after the above-mentioned predetermined temperature has been reached, 3 to 30 minutes, preferably 5 to 20 minutes, more preferably 8 to 15 minutes. In the vacuum treatment step, the vacuum pressure value is in the range of 1 to 80 kPa, preferably 3 to 70 kPa, more preferably 5 to 50 kPa. In the vacuum treatment step, the vacuum treatment time is, after the above-mentioned predetermined pressure value has been reached, 2 to 30 minutes, preferably 3 to 20 minutes, more preferably 5 to 10 minutes. When the vacuum treatment step is conducted two or more times, the vacuum step is preferably conducted so that the pressure in the second step is lower than that in the first step, or the pressure in the third step is lower than that in the second step. In the heating treatment, a pressure treatment may be simultaneously conducted such that the fiber structure is sandwiched between molds, metal plates, or the like so as to achieve physical properties, such as a thickness, a density, or a hardness, in the intended range. When a metal plate is used, it is preferred that the metal plate has a thickness of 1 to 10 mm, and that the metal plate has formed therein circular pores having a diameter of 1 to 10 mm, preferably 2 to 8 mm, or tetragonal pores of a square having one side of 1 to 10 mm, preferably 2 to 8 mm, or a rectangle. Examples of arrangements of pores include patterns of pore arrangements, such as a circular pore zigzag arrangement, a circular pore parallel arrangement, a square pore zigzag arrangement, a square pore parallel arrangement, and a rectangular pore parallel arrangement. The pitch between the pores is 50 to 200 mm, preferably 80 to 150 mm. When pores are formed in the metal plate at predetermined pitches, dry heated air, steam, or the like as a heating medium can be introduced not only from the thicknesswise direction of the fiber cushioning material before subjected to heating treatment but also from the surface and the back surface. Further, in the vacuum treatment, dry heated air, steam, or the like can be withdrawn also from the pores. Therefore, it is possible to cause the heating treatment step and vacuum treatment step to more efficiently proceed. Further, when the pores are larger than the above-mentioned size, or when the pitch of the pores is smaller than the above-mentioned value, it is likely that the staple fibers stick out or protrude from the metal plates or removed from the fiber cushioning material before the staple fibers and other staple fibers together form fixing points, making it impossible to produce a fiber structure having desired physical properties. Fig. 5 shows a diagrammatic view showing a fiber structure 11 having a surface layer portion 5 and an intermediate layer portion 6, which is sandwiched between metal plates 9 having pores 10 and subjected to heating treatment.

Examples

Hereinbelow, the present invention will be described in more detail with reference to the following Examples, which should not be construed as limiting the scope of the invention. The physical properties of the crimped staple fibers, heat-bonding conjugate staple fibers, fiber cushioning material (nonwoven fabric sheet), fiber structure, and the like were individually measured and evaluated according to the procedures described below.

(1) Melting point of a thermoplastic resin

A sample was taken from a thermoplastic resin constituting the conjugate staple fibers, and a fusion peak was measured using Differential scanning calorimeter Model 990, manufactured by DuPont Co., at a temperature elevation rate of 20°C/minute. A temperature at the peak top of the fusion peak was determined as a melting point of the thermoplastic resin. When the fusion peak was not clearly observed by the differential scanning calorimeter, the melting point was determined using a micro-melting point measurement apparatus (manufactured by Yanagimoto Seisakusho Co., Ltd.). The thermoplastic resin was set in a predetermined position of the micro-melting point measurement apparatus and the temperature of that portion was increased, and a temperature (softening point) at which the thermoplastic resin started softening to flow was determined as a melting point. Using 5 samples for measurement, the measurement and evaluation by the micro-melting point measurement apparatus were conducted at N = 5, and an average of the measured values was taken as a value of the melting point of the thermoplastic resin.

(2) Fiber length, single yarn fineness, and the number of crimps of staple fibers

According to the methods descried in JIS-L1015:2010 at Items 8.4. Fiber length, 8.5. Fineness, and 8.12.1. Number of crimps, the physical properties of the obtained staple fibers (crimped staple fibers and heat-bonding conjugate staple fibers) were individually measured and evaluated.

(3) Conjugate morphology and conjugate ratio of conjugate fiber

A cross-section of the heat-bonding conjugate staple fibers taken along the direction perpendicular to the fiber axis was examined under a scanning electron microscope at a magnification of 2,000 times to check the conjugate morphology (side-by-side type, core-sheath type, island-in-sea type or the like) and conjugate ratio of the heat-bonding conjugate fibers, and, from the area ratios of the individual components in the conjugate staple fiber cross-section, a conjugate ratio was calculated.

(4) Single fiber diameter of staple fibers

Using a scanning electron microscope or an optical microscope, a cross-sectional photograph of a nonwoven fabric sheet or fiber structure was taken. From the taken cross-sectional photograph, 5 samples were arbitrarily selected, and a single fiber diameter of each of the crimped staple fibers and the conjugate staple fibers was measured, and an average of the measured values was calculated and taken as a single fiber diameter of each staple fiber.

(5) Type of the thermoplastic resin constituting the staple fibers

With respect to the obtained staple fibers, a $^1$H-NMR measurement was conducted, and the resultant NMR spectrum was analyzed to identify a chemical structure of the repeating units of the thermoplastic resin constituting the staple fibers.

(6) Observation of fixing points in the fiber structure, and observation of the layer structure

The surface or inside of the produced fiber structure was examined under an optical microscope at a magnification of 100 times to check whether the conjugate staple fibers were fused to form fixing points or the conjugate staple fibers and the crimped staple fibers were fused to form fixing points. Simultaneously, the cross-section of the fiber structure was examined under a microscope to check the layer structure of the fiber structure according to the density or direction of arrangement of the crimped staple fibers or heat-bonding conjugate staple fibers.

(7) T/W

The fiber structure was cut in the thicknesswise direction, and, with respect to the resultant cross-section, the total number of the crimped staple fibers and heat-bonding conjugate staple fibers arranged in parallel to the thicknesswise direction of the fiber structure ($0° \leq \theta \leq 45°$ in Fig. 1) was taken as T. Meanwhile, the total number of the crimped staple fibers and heat-bonding conjugate staple fibers arranged in the direction perpendicular to the thicknesswise direction of the fiber structure ($45° < \theta \leq 90°$ in Fig. 1) was taken as W, and T/W was calculated. In the measurement of the number of staple fibers, with respect to each of arbitrary 10 sites, 30 fibers were examined under a transmission optical microscope, and the number of staple fibers was measured. From the number, T/W was calculated.

(8) Thickness, fiber areal weight, density, and hardness of the fiber structure

A thickness of the fiber structure was measured by the method descried in JIS K7248:2005, and an apparent density of the fiber structure was measured by the method descried in JIS K7222:2005. A hardness of the fiber structure was measured according to the Method B descried in JIS K6400-2:2012, Item 6.5. Specifically, the following operations were conducted.

(8-1) Apparatus and sample used

(8-1-1) Hardness meter (Testing machine)

The testing machine is capable of compressing a test specimen between a press plate which moves in the vertical direction at a speed of 100±20 mm/minute and a support plate which is fixed. Further, the testing machine is capable of measuring a force with an accuracy of ±1 N or higher accuracy, and measuring a thickness of the test specimen under compression with an accuracy of ±0.25 mm.

(8-1-2) Support plate

The support plate is larger than a test specimen and has a surface which is horizontal, smooth, and hard. Further, the support plate has vent pores having a diameter of about 6 mm at intervals of about 20 mm for permitting air to go out of the lower part of the test specimen.

(8-1-3) Press plate

The press plate is fitted by a ball joint or another method so that it can be vertically freely moved, and is a flat disc having a diameter of 200 to 203 mm and has a lower edge having a radius of 1.0 to 1.3 mm. The lower surface of the press plate is a smooth surface which has not been polished.

(8-1-4) Test specimen

(8-1-4-1) Shape and dimension

A test specimen having a square shape with a one side size of 380 mm is employed. In the case of a sheet thinner than the specified thickness, the sheet is laminated on another so that the thickness of the resultant laminate is close to the specified thickness. In the case of a laminate or a final product, the result is not always consistent with the result of the test conducted for the specified test specimen. In the case of a test specimen of a sample having a directional property, the test specimen was taken so that the compression direction is the same as the direction in which the product is compressed in the actual use. In the invention, the direction in which the product is compressed means the direction referred to as "the thicknesswise direction of the fiber structure".

(8-1-4-2) Sampling method for a test specimen

A sample for measurement was taken from the middle portion of the fiber structure. In the thickness direction, the sample was equally divided into three portions, which were called surface layer portions and an intermediate layer portion.

(8-2) Method for test operation

(8-2-1) Preliminary compression

Preliminary compression is made by conducting the following operations.

a) A test specimen is placed on the support plate so that the center of the test specimen meets the center of the press plate.
b) The position of the press plate when applying a force of 5 N by the press plate is taken as an initial position, and a thickness of the test specimen at that time is read with a minimum scale of 0.1 mm and measured. Then, the press plate is pressed at a speed of 100±20 mm/minute until the thickness becomes 70±2.5% of the thickness of the specimen.
c) After the operation of b), the press plate is recovered to the initial position at the same speed. A similar operation of compression and recovery is repeated twice.

(8-2-2) Measurement method

Immediately after completion of the preliminary compression, the following operation was performed to determine a hardness.

a) The press plate was pressed at a speed of 100±20 mm/minute until the thickness became (25±1)% of the thickness of the test specimen, and maintained for 30±1% seconds and then a force was read with a unit of 1 N and taken as a value of hardness. In the preliminary compression operation and measurement operation, the hardness of the surface layer portion does not indicate the hardness of the surface on the surface layer portion side with which the surface layer portion and the intermediate layer portion are in contact, but indicates the hardness of the surface on the opposite side, i.e., the surface on the uppermost surface side of the fiber structure. Further, in the invention, any measured values of hardness were read in units of 1 N, and a value as measured at 25% compression was employed as a value of hardness.

(9) Bending feeling

A fiber structure having at least a size having a width of 500 mm and a length of 1,000 mm was prepared. The end of the fiber structure was lifted so that the middle of the fiber structure as viewed in the lengthwise direction (denoted by reference numeral 15 in Fig. 6) was a portion to be bent (denoted by numeral 13 in Fig. 6; hereinafter, referred to as "bent portion"). When the angle of the fiber structure before bent was taken as 0 degrees, the fiber structure was bent at an angle of 30 degrees (which is the angle denoted by numeral 14 in Fig. 6), and the appearance of the resultant bent portion was judged according to the criteria shown below. With respect to the state of the fiber structure after being bent, reference can be made to Fig. 6. If necessary, for preventing the bent portion from rising up, a load may be applied to the horizontal portion (the site indicated by the tip of an arrow denoted by numeral 4 in Fig. 6, or the like) except the bent portion in the direction the arrow points. When the bed mattress has excellent bending feeling, the bed mattress is gently curved even in the state in which a person lying on the bed mattress is in a backrest sitting position (a supine position in which the upper body is raised using a jack function that moves the bed in the vertical direction), so that the person can comfortably lie on the mattress.

Level 1: A fold can be clearly seen in the width direction of the bent portion of the fiber structure.
Level 2: A fold can be seen in part of the width direction of the bent portion of the fiber structure.
Level 3: A fold cannot be seen in part of the width direction of the bent portion of the fiber structure.

(10) Interlaminar peel strength

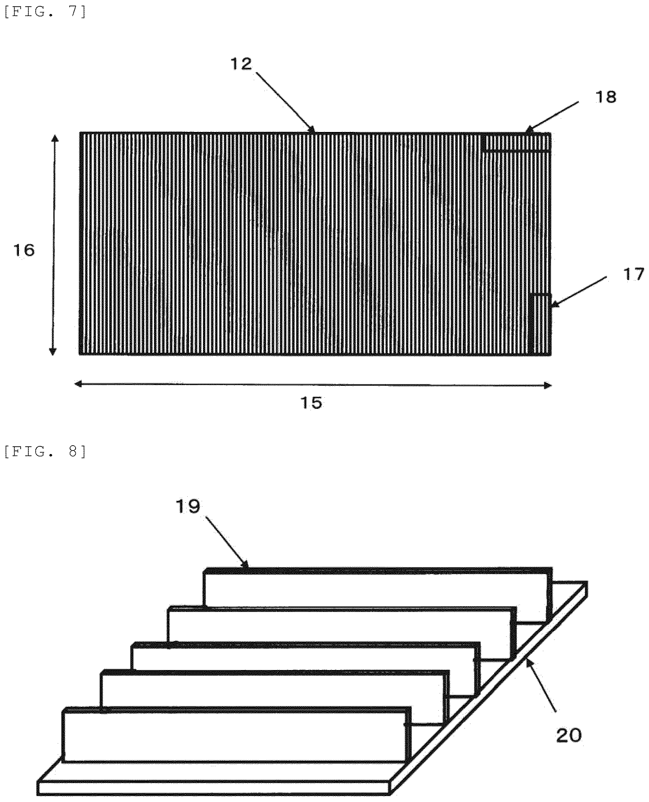

In the invention, an interlaminar peel strength between a fiber layer A and a fiber layer B was measured by the following method. From the produced fiber structure, a test specimen having a width of 50 mm, a length of 150 mm, and the same thickness as the thickness of the fiber structure was taken to prepare a test specimen for interlaminar peel strength measurement. In the layer of the fiber cushioning material in the test specimen, when the staple fibers are arranged in the thicknesswise direction of the fiber structure, the direction of sampling for the test specimen means the direction perpendicular to the lengthwise direction of the fiber structure. That is, a test specimen is taken and cut so that the longer direction of the specimen is along the width direction (see reference numeral 16 in Fig. 7) in the process for producing the fiber cushioning material (nonwoven fabric sheet) and the resultant test specimen is used (see numeral 17 in Fig. 7). With respect to the sampling method for a test specimen in this case, reference can be made to Fig. 7. In the case where the test specimen is arranged in the thicknesswise direction of the fiber structure, with respect to the measured value of interlaminar peel strength, the measurement and evaluation are conducted at N = 5, and an average of the measured values is taken as a value of interlaminar peel strength. Further, in the case where the test specimen is not arranged in the thicknesswise direction of the fiber structure, with respect to the measured value of interlaminar peel strength, the measurement and evaluation are conducted at N = 3 in each of the lengthwise direction and the width direction of the fiber structure, and an average of the measured values is taken as a value of interlaminar peel strength.
Interlaminar peel was made between a layer A and a layer B present in the boundary line (boundary surface) of the laminated structure observed around the middle as viewed in the thicknesswise direction of the fiber structure, and a peel strength between the layer A and the layer B was taken as an interlaminar peel strength. The boundary between the layer A and the layer B was determined by observing the laminated structure of the fiber structure according to the method described above in the item of " (6) Observation of fixing points in the fiber structure, and observation of the layer structure" . The boundary of the laminated structure of the fiber structure was cut into a size of 30 mm by a knife in the direction parallel to the thicknesswise direction of the fiber structure and in the lengthwise direction of the test specimen, preparing a test specimen. Then, using a tensile tester, a distance between chucks was set to 50 mm, and the two ends of the above-mentioned test specimen cut into a size of 30 mm were fixed by the respective chucks. The peeled surface was peeled 100 mm at a pulling rate of 100 mm/minute to measure a maximum load point, and the measured value was taken as an interlaminar peel strength of the laminated nonwoven fabric.
When the staple fibers are arranged in the thicknesswise direction of the fiber structure, a structure is formed in which a web of the staple fibers is folded along the width direction (see reference numeral 16 in Fig. 7) of the fiber structure or fiber cushioning material (nonwoven fabric sheet). Therefore, when a test specimen is taken so that the longer direction of the specimen is along the lengthwise direction (see numeral 15 in Fig. 7) of the fiber structure (see numeral 18 in Fig. 7), there is a possibility that the folded web of the staple fibers is peeled so that a load/strain caused when pulling the web affects the peel strength. For preventing this, the direction for taking a test specimen is limited to the above-mentioned single direction.

(11) Cushioning properties

The fiber mattress described in the Example or Comparative Example was laid on a floor, and a male adult actually lay down on the mattress, and, with respect to the feeling in bed in the static state (static feeling in bed) and the movability upon shifting sleeping positions (dynamic feeling in bed), the cushioning properties were judged according to the following criteria.

Level 1: The whole body is considerably buried in the fiber mattress, and it is difficult to shift sleeping positions. In addition, there is a bottom touching feeling such that he feels hardness of the floor surface.
Level 2: The whole body is slightly considerably buried in the fiber mattress, and it is slightly difficult to shift sleeping positions. Alternatively, the whole body is substantially not buried in the fiber mattress, and it is easy to shift sleeping positions. Further, there is not a bottom touching feeling such that he feels hardness of the floor surface.
Level 3: The whole body is appropriately buried in the fiber mattress, and it is easy to shift sleeping positions, and there is not a bottom touching feeling such that he feels hardness of the floor surface.

(12) Washing durability

A thickness of a fiber mattress is measured, and then the fiber mattress is rolled (bent) and set in the inner sidewall of a drum of a washing apparatus for mattress of an open-sided drum system (manufactured by Inamoto Manufacturing Co., Ltd.). Then, the drum is filled with warm water at 50°C. Subsequently, the drum is rotated and a washing operation is performed for 30 minutes, and a centrifugal dehydration operation is performed for 15 minutes, and then the fiber mattress is removed from the drum. The removed fiber mattress was placed in a flat state in a hot-air drying apparatus (manufactured by Inamoto Manufacturing Co., Ltd.) and dried with warm air at 80°C for 30 minutes. Then, the fiber mattress was removed, and a thickness of the fiber mattress after the washing and drying was measured and a change ratio was calculated.

$$\text{Change ratio (\%)}$$
$$= (\text{Thickness after washing and drying} - \text{Thickness before washing})/(\text{Thickness before washing}) \times 100$$

A change between the thicknesses before and after the washing and drying largely affects physical properties of the fiber structure, such as a density, a hardness, cushioning properties, and bending feeling. Therefore, a change ratio between the thicknesses before and after the washing and drying can be an index for judging the durability (maintaining ratio) in respect of various physical properties of the fiber structure in a long-term use.

(13) Moldability

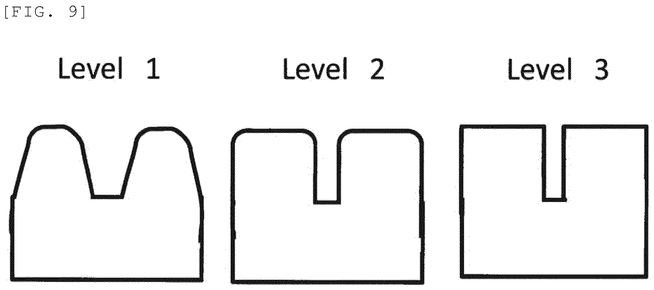

From each of the fiber cushioning materials before molded which were prepared under the conditions described in the Examples and Comparative Examples, a piece having a width of 500 mm × a length of 500 mm is cut and prepared. Further, one mold made of aluminum is prepared, wherein the aluminum mold has an uneven form such that one surface of the mold has protrusion portions having a height of 30 mm and a thickness of 5 mm and being arranged in parallel at intervals of 70 mm (reference numeral 19 in Fig. 8) and the other surface has a flat form (reference numeral 20 in Fig. 8). The aluminum mold having an uneven form is shown in Fig. 8. As the other mold of a pair of the molds, a mold made of aluminum having both surfaces which are flat is prepared. Then, the above-mentioned two types of aluminum molds are placed at a distance between them which is set so that a thickness equivalent to the thickness indicated in each of the Examples and Comparative Examples can be obtained. In this instance, the mold having an uneven form is placed so that the side having an uneven form is in contact with the fiber cushioning material before molded during the molding processing. Then, molding processing is performed under the conditions for the temperature, time, and pressure described in the Examples and Comparative Examples, and the aluminum molds are removed. The cross-sectional shape of the obtained fiber structure was observed from the side, and the moldability of the fiber structure for the uneven form was judged according to the criteria shown below. Diagrammatic views of the shapes of the fiber mattresses of Levels 1 to 3 were shown in Fig. 9.

Level 1: An end of the uneven portion of the fiber mattress is round.
Level 2: An end of the uneven portion of the fiber mattress is slightly round.
Level 3: The uneven portion of the fiber mattress has the same shape as that of the aluminum mold.

The evaluation for moldability can be an index for judging whether or not the fiber structure is advantageously used in applications, such as seats for various types of vehicles and furniture cushions, which are required to be molded into a complicated shape.

[Example 1]

An acid component having terephthalic acid and isophthalic acid mixed in an 80/20 (mol%) ratio and butylene glycol were polymerized. The obtained polybutylene terephthalate in an amount of 38% by weight and polytetramethylene glycol (molecular weight: 2,000) in an amount of 62% by weight were reacted by heating to obtain a block-copolymerized polyether polyester elastomer. The obtained thermoplastic elastomer had a melting point of 155°C. The thermoplastic elastomer was disposed as a sheath portion (sheath) and polyethylene terephthalate (melting point: 256°C) was disposed as a core portion (core), and they were spun so that the sheath/core weight ratio (conjugate ratio) became 50/50 to obtain an eccentric sheath-core type conjugate fiber (unstretched yarn) . The obtained conjugate fiber (unstretched yarn) was stretched at 2.0 times, and dried at 80°C to cause crimps, and then an oil agent was applied to the fiber, and the resultant fiber was cut into a fiber length of 51 mm to obtain heat-bonding conjugate staple fibers. The obtained heat-bonding conjugate staple fibers had a single yarn fineness of 6.6 dtex and the number of crimps was 13/2.54 cm.

Then, the heat-bonding conjugate staple fibers in an amount of 40% by weight and, as crimped staple fibers, polyethylene terephthalate staple fibers obtained by a general method (single yarn fineness: 13.0 dtex; fiber length: 64 mm; number of crimps: 9/2.54 cm; the cross-sectional shape is a circular shape having one circular hole in the center; melting point: 256°C) in an amount of 60% by weight were mixed and a web was prepared using a general carding machine. The obtained web was folded in the thicknesswise direction using Struto facility, manufactured by Struto, and immediately treated by means of a hot-air suction heat treatment machine (hot air at 200°C) for 5 minutes to obtain a fiber cushioning material. In the obtained fiber cushioning material (nonwoven fabric sheet), the T/W was 1.50 or more and the fibers stood upright in the thicknesswise direction of the fiber cushioning material, and the heat-bonding conjugate staple fibers and the crimped staple fibers were arranged in the thicknesswise direction of the fiber cushioning material. The fiber cushioning material had a fiber areal weight of 750 g/m$^2$ and a thickness of 25 mm. Further, the heat-bonding conjugate staple fibers had a single fiber diameter of 26.0 $\mu$m, and the crimped staple fibers had a single fiber diameter of 36.0 $\mu$m. The nonwoven fabric sheet was cut into sheets each having a width of 900 mm and a length of 2,000 mm, and the 6 sheets were laminated. Two metal plates each having pores therein were prepared. The laminated nonwoven fabric sheets were sandwiched between the two metal plates, and subjected to compression molding, and then subjected to vacuum treatment, and then subjected to thermoforming processing by a wet heat treatment using high-pressure steam to produce a fiber structure. The pores in the metal plates had a size of 3 to 5 mm$\phi$ and were arranged in a zigzag pattern at pitches of 100 mm.

The thermoforming processing conditions for the fiber structure obtained after the compression molding and the physical properties were as shown in Tables 2 and 3. The obtained fiber structure was examined under an optical microscope. As a result, it was observed that fixing points in which the heat-bonding conjugate staple fibers were heat-fused and fixing points in which the heat-bonding conjugate staple fibers and the crimped staple fibers were heat-fused were scattered. The produced fiber structure had a 6-layer structure, and the fiber structure was actually used in the bed mattress application. As a result, it was found that the fiber structure had very excellent cushioning feeling and had very excellent bending (bending feeling) . The physical properties of the staple fibers and nonwoven fabric sheet used for producing the fiber structure were shown in Table 1, the conditions for producing the fiber structure were shown in Table 2, and the results of the evaluation of physical properties of the fiber structure were shown in Table 3.

[Example 2]

Using the same raw cotton formulation as in Example 1, in the process for producing nonwoven fabric, fibers were opened by carding, and then layered using a cross-layer to obtain a web. The obtained web was folded in the thicknesswise direction into a sheet form, and sandwiched between aramid nets on both sides and subjected to heating treatment by means of a hot-air suction heat treatment machine using hot air at 200°C to obtain a nonwoven fabric sheet. The nonwoven fabric sheet had a fiber areal weight of 600 g/m$^2$ and a thickness of 30 mm. The T/W was 0.10, and the fibers were arranged in the direction perpendicular to the thicknesswise direction of the nonwoven fabric sheet. The nonwoven fabric sheet was cut into sheets each having a width of 900 mm and a length of 2,000 mm, and the 7 sheets were laminated. Two metal plates each having pores therein were prepared, which were the same as those used in Example 1. The laminated nonwoven fabric sheets were sandwiched between the two metal plates in the same manner as in Example 1, and subjected to compression molding, and then subjected to vacuum treatment, and then subjected to thermoforming processing by a wet heat treatment using high-pressure steam to produce a fiber structure. The obtained fiber structure was examined under an optical microscope. As a result, it was observed that fixing points in which the heat-bonding conjugate staple fibers were heat-fused and fixing points in which the heat-bonding conjugate staple fibers and the crimped staple fibers were heat-fused were scattered.

The thermoforming processing conditions for the fiber structure obtained after the compression molding and the physical properties were as shown in Tables 2 and 3. The produced fiber structure had a 7-layer structure, and the fiber structure was actually used in the bed mattress application. As a result, it was found that the fiber structure had very excellent cushioning feeling and had excellent bending (bending feeling) . The physical properties of the staple fibers and nonwoven fabric sheet used for producing the fiber structure were shown in Table 1, the conditions for producing the fiber structure were shown in Table 2, and the results of the evaluation of physical properties of the fiber structure were shown in Table 3.

[Example 3]

Instead of the heat-bonding conjugate staple fibers in Example 1, a core-sheath type conjugate copolymerized polyester fiber was used. The fiber length was 51 mm, the single yarn fineness was 4.4 dtex, and the number of crimps was 13/2.54 cm. The single fiber cross-sectional shape was a solid circular cross-section. Using the core-sheath type conjugate copolymerized polyester fiber in an amount of 50% by weight, the crimped staple fibers used in Example 1 in an amount of 50% by weight, and the same crimped staple fibers as in Examples 1 and 2, a nonwoven fabric sheet was prepared.

The core-sheath type conjugate copolymerized polyester fiber is core-sheath type conjugate staple fibers having a copolymerized polyester having a melting point of 110°C as a sheath component and a general polyethylene terephthalate as a core component. The copolymerized polyester is a copolymerized polyester comprising a dicarboxylic acid component obtained by copolymerizing terephthalic acid and isophthalic acid in a 60/40 (mol%) ratio, and a diol component obtained by copolymerizing ethylene glycol and diethylene glycol in an 85/15 (mol%) ratio. Then, two metal plates each having pores therein were prepared, which were the same as those used in Example 1. The nonwoven fabric sheet was cut into sheets each having a width of 900 mm and a length of 2,000 mm, and the 6 sheets were laminated. The laminated nonwoven fabric sheets were sandwiched between the two metal plates having pores therein used in Example 1, and subjected to compression molding, and then subjected to vacuum treatment, and then subjected to thermoforming processing by a wet heat treatment using high-pressure steam to produce a fiber structure. The obtained fiber structure was examined under an optical microscope. As a result, it was observed that fixing points in which the heat-bonding conjugate staple fibers were heat-fused and fixing points in which the heat-bonding conjugate staple fibers and the crimped staple fibers were heat-fused were scattered.

The heat-bonding conjugate staple fibers had a staple fiber diameter of 21 $\mu$m. The processing conditions for the fiber structure obtained after the compression molding and the physical properties were as shown in Tables 2 and 3. According to the change of the structure of the heat-bonding conjugate staple fibers, the processing conditions were changed from those in Examples 1 and 2. The produced fiber structure had a 6-layer structure, and the fiber structure was actually used in the bed mattress application. As a result, it was found that the fiber structure had excellent cushioning feeling and had very excellent bending (bending feeling). The physical properties of the staple fibers and nonwoven fabric sheet used for producing the fiber structure were shown in Table 1, the conditions for producing the fiber structure were shown in Table 2, and the results of the evaluation of physical properties of the fiber structure were shown in Table 3.

[Example 4]

A nonwoven fabric sheet being the same as that used in Example 1 and having a weight of 750 g/m$^2$, a thickness of 25 mm, and a T/W of 1.50 or more, with the fibers standing upright in the thicknesswise direction, was cut into sheets each having a width of 900 mm and a length of 2,000 mm, and the 2 cut nonwoven fabric sheets were laminated. A nonwoven fabric sheet being the same as that used in Example 2 and having a weight of 600 g/m$^2$, a thickness of 30 mm, and a T/W of 0.10, with the fibers arranged in the direction perpendicular to the thicknesswise direction, was cut into sheets each having a width of 900 mm and a length of 2,000 mm, and the 4 sheets were laminated as a lower layer. The laminated nonwoven fabric sheets were sandwiched between the two metal plates having pores therein used in Example 1, and subjected to compression molding, and then subjected to vacuum treatment, and then subjected to thermoforming processing by a wet heat treatment using high-pressure steam to produce a fiber structure. The obtained fiber structure was examined under an optical microscope. As a result, it was observed that fixing points in which the heat-bonding conjugate staple fibers were heat-fused and fixing points in which the heat-bonding conjugate staple fibers and the crimped staple fibers were heat-fused were scattered.

The processing conditions for the fiber structure obtained after the compression molding and the physical properties were as shown in Tables 2 and 3. The produced fiber structure had a 6-layer structure. The produced fiber structure was actually used in the bed mattress application so that the surface having the nonwoven fabric sheet having a T/W of 1.50 or more was used as the upper surface that a body contacted. As a result, it was found that the fiber structure had very excellent cushioning feeling and had very excellent bending (bending feeling) . The physical properties of the staple fibers and nonwoven fabric sheets used for producing the fiber structure were shown in Table 1, the conditions for producing the fiber structure were shown in Table 2, and the results of the evaluation of physical properties of the fiber structure were shown in Table 3.

[Example 5]

A fiber structure was produced under substantially the same conditions as in Example 1 except that, instead of the 6 cut nonwoven fabric sheets each having a width of 900 mm and a length of 2,000 mm in Example 1, the 10 cut nonwoven fabric sheets were laminated, and that the times for the vacuum treatment and the wet heat treatment were changed. The obtained fiber structure was examined under an optical microscope. As a result, it was observed that fixing points in which the heat-bonding conjugate staple fibers were heat-fused and fixing points in which the heat-bonding conjugate staple fibers and the crimped staple fibers were heat-fused were scattered.

The produced fiber structure had a 10-layer structure, and the produced fiber structure was actually used in the bed mattress application. As a result, it was found that the fiber structure had very excellent cushioning feeling and had very excellent bending (bending feeling). The physical properties of the staple fibers and nonwoven fabric sheet used for producing the fiber structure were shown in Table 1, the conditions for producing the fiber structure were shown in Table 2, and the results of the evaluation of physical properties of the fiber structure were shown in Table 3.

[Example 6]

A fiber structure was produced under substantially the same conditions as in Example 1 except that, instead of the 13.0 dtex crimped staple fibers and the 6.6 dtex heat-bonding conjugate staple fibers used in Example 1, 30.0 dtex crimped staple fibers and 15.0 dtex heat-bonding conjugate staple fibers were used. The obtained fiber structure was examined under an optical microscope. As a result, it was observed that fixing points in which the heat-bonding conjugate staple fibers were heat-fused and fixing points in which the heat-bonding conjugate staple fibers and the crimped staple fibers were heat-fused were scattered.

The produced fiber structure had a 6-layer structure, and the produced fiber structure was actually used in the bed mattress application. As a result, it was found that the fiber structure had very excellent cushioning feeling and had very excellent bending (bending feeling). The physical properties of the staple fibers and nonwoven fabric sheet used for producing the fiber structure were shown in Table 1, the conditions for producing the fiber structure were shown in Table 2, and the results of the evaluation of physical properties of the fiber structure were shown in Table 3.

[Example 7]

A nonwoven fabric sheet which is the same as the nonwoven fabric sheet used in Example 1, and which has a weight of 750 g/m$^2$, a thickness of 25 mm, and a T/W of 1.50 or more, in which the fibers stand upright in the thicknesswise direction, was cut into sheets each having a width of 900 mm and a length of 2,000 mm, and the 2 sheets were laminated. A nonwoven fabric sheet which is the same as the nonwoven fabric sheet used in Example 2, and which has a weight of 600 g/m$^2$, a thickness of 30 mm, and a T/W of 0.10, in which the fibers are arranged in the direction perpendicular to the thicknesswise direction, was cut into sheets each having a width of 900 mm and a length of 2,000 mm, and the 2 sheets were laminated as a lower layer. Further, a nonwoven fabric sheet which is the same as the nonwoven fabric sheet used in Example 1, and which has a T/W of 1.50 or more, in which the fibers stand upright in the thicknesswise direction, was cut into sheets each having a width of 900 mm and a length of 2,000 mm, and the 2 sheets were laminated as a lower layer. As a result, a laminate of nonwoven fabric sheets was obtained in which 2 layers of the nonwoven fabric sheets having a T/W of 1.50 or more, 2 layers of the nonwoven fabric sheets having a T/W of 0.10, and 2 layers of the nonwoven fabric sheets having a T/W of 1.50 or more are laminated in this order. Then, under the same conditions as in Example 4, the laminate was subjected to compression molding, and then subjected to vacuum treatment, and then subjected to thermoforming processing by a wet heat treatment using high-pressure steam to produce a fiber structure. The obtained fiber structure was examined under an optical microscope. As a result, it was observed that fixing points in which the heat-bonding conjugate staple fibers were heat-fused and fixing points in which the heat-bonding conjugate staple fibers and the crimped staple fibers were heat-fused were scattered.

The produced fiber structure had a 6-layer structure, and the produced fiber structure was actually used in the bed mattress application. As a result, it was found that the fiber structure had very excellent cushioning feeling and had very excellent bending (bending feeling). The physical properties of the staple fibers and nonwoven fabric sheets used for producing the fiber structure were shown in Table 1, the conditions for producing the fiber structure were shown in Table 2, and the results of the evaluation of physical properties of the fiber structure were shown in Table 3.

[Example 8]

A fiber structure was produced under substantially the same conditions as in Example 4 except that 25 g/m$^2$ continuous fiber nonwoven fabric, manufactured by Unisel Co., Ltd., was further disposed on the laminated nonwoven fabric sheets in Example 4 on the side that the nonwoven fabric sheet in which the fibers stand upright in the thicknesswise direction is present as the surface. The obtained fiber structure was examined under an optical microscope. As a result, it was observed that fixing points in which the heat-bonding conjugate staple fibers were heat-fused and fixing points in which the heat-bonding conjugate staple fibers and the crimped staple fibers were heat-fused were scattered.

The produced fiber structure had a structure in which extremely thin nonwoven fabric is laminated on a 6-layer structure, and the produced fiber structure was actually used in the bed mattress application so that the surface having the continuous fiber nonwoven fabric was the upper surface that a body contacted. As a result, it was found that the fiber structure had very excellent cushioning feeling and had very excellent bending (bending feeling). The physical properties of the staple fibers and nonwoven fabric sheets used for producing the fiber structure were shown in Table 1, the conditions for producing the fiber structure were shown in Table 2, and the results of the evaluation of physical properties of the fiber structure were shown in Table 3. When the bed mattress was inserted into the outer cover of cloth, the fibers standing upright in the thicknesswise direction reduced the friction due to the continuous fiber nonwoven fabric, so that it was easy to insert the bed mattress into the outer cover. The reason for this is presumed that the frictional force caused between the fibers standing upright in the thicknesswise direction and the fibers constituting the outer cover is smaller than the frictional force caused between the fibers arranged in the direction perpendicular to the thicknesswise direction and the fibers constituting the outer cover.

[Example 9]

Instead of the nonwoven fabric sheet which has a weight of 750 g/m$^2$, a thickness of 25 mm, and a T/W of 1.50 or more, in which the fibers stand upright in the thicknesswise direction, and which is disposed as two layers on the surface side and two layers on the back surface side in Example 1, nonwoven fabric which has a weight of 550 g/m$^2$, a thickness of 25 mm, and a T/W of 1.30, in which the fibers stand upright in the thicknesswise direction, was disposed as two layers on the surface side and two layers on the back surface side to obtain a laminate having 6 layers of nonwoven fabric sheets. Then, a fiber structure was produced under the same conditions as in Example 1. The obtained fiber structure was examined under an optical microscope. As a result, it was observed that fixing points in which the heat-bonding conjugate staple fibers were heat-fused and fixing points in which the heat-bonding conjugate staple fibers and the crimped staple fibers were heat-fused were scattered. The produced fiber structure had a 6-layer structure, and the produced fiber structure was actually used in the bed mattress application. As a result, it was found that the fiber structure had very excellent cushioning feeling and had very excellent bending (bending feeling) . The physical properties of the staple fibers and nonwoven fabric sheets used for producing the fiber structure were shown in Table 1, the conditions for producing the fiber structure were shown in Table 2, and the results of the evaluation of physical properties of the fiber structure were shown in Table 3.

[Example 10]

Six nonwoven fabric sheets were prepared in the same manner as in Example 1, and only one sheet among them was cut into a size having a length of 700 mm and a width of 700 mm. The nonwoven fabric sheets were laminated so that the above-cut nonwoven fabric sheet was the second layer from the surface layer and was disposed at the position of the part corresponding to a waist of a body when used in the bed mattress application, and the resultant laminate was subjected to vacuum treatment and heating treatment under the same conditions as in Example 1 to produce a fiber structure. The obtained fiber structure was examined under an optical microscope. As a result, it was observed that fixing points in which the heat-bonding conjugate staple fibers were heat-fused and fixing points in which the heat-bonding conjugate staple fibers and the crimped staple fibers were heat-fused were scattered. In the produced fiber structure, the part corresponding to a waist of a body when used in the bed mattress application had a 6-layer structure, and the other part had a 5-layer structure.

The produced fiber structure was actually used in the bed mattress application so that the nonwoven fabric sheet cut into 700 mm $\times$ 700 mm was the second layer from the upper surface that a body contacted. As a result, it was found that the fiber structure was a bed mattress in which the part corresponding to a waist was hard and the other part was soft, and that the fiber structure had very excellent cushioning feeling and had very excellent bending (bending feeling). The physical properties of the staple fibers and nonwoven fabric sheets used for producing the fiber structure were shown in Table 1, the conditions for producing the fiber structure were shown in Table 2, and the results of the evaluation of physical properties of the fiber structure were shown in Table 3. With respect to the hardness and interlaminar peel strength, a sample was taken from the portion of 6-layer structure and subjected to measurement of the physical properties.

[Comparative Example 1]

A fiber structure was prepared in substantially the same manner as in Example 1 except that the processing conditions were changed to the processing conditions shown in Table 2. The fiber structure was actually used in the bed mattress application. As a result, it was found that the fiber structure had bottom touching feeling, and was bent like a buckled formed article in a bent state which is similar to the state of folded corrugated board. The physical properties of the staple fibers and nonwoven fabric sheet used for producing the fiber structure were shown in Table 1, the conditions for producing the fiber structure were shown in Table 2, and the results of the evaluation of physical properties of the fiber structure were shown in Table 3. The reason of the results is presumed that the hardness ratio of the intermediate layer portion and the surface layer portion is small, as compared to that in Example 1.

[Table 1]

| | Fineness (dtex) of staple fibers | | Single fiber diameter ($\mu$m) of staple fibers | | Combination of nonwoven fabric sheets (Fiber areal weight [g/m$^2$]/Thickness [mm]/ Number of sheets) | | |
|---|---|---|---|---|---|---|---|
| | Heat-bonding conjugate staple fibers | Crimped short fibers | Heat-bonding conjugate staple fibers | Crimped short fibers | First nonwoven fabric sheet | Second nonwoven fabric sheet | Third nonwoven fabric sheet |
| Example 1 | 6.6 | 13.0 | 26.0 | 36.0 | 750/25.0/6 | None | None |
| Example 2 | 6.6 | 13.0 | 26.0 | 36.0 | 600/30.0/7 | None | None |
| Example 3 | 4.4 | 13.0 | 21.0 | 36.0 | 750/25.0/6 | None | None |
| Example 4 | 6.6 | 13.0 | 26.0 | 36.0 | 750/25.0/2 | 600/30.0/4 | None |
| Example 5 | 6.6 | 13.0 | 26.0 | 36.0 | 750/25.0/10 | None | None |
| Example 6 | 15.0 | 30.0 | 39.0 | 55.0 | 750/25.0/6 | None | None |
| Example 7 | 6.6 | 13.0 | 26.0 | 36.0 | 750/25.0/2 | 600/30.0/2 | 750/25.0/2 |
| Example 8 * | 6.6 | 13.0 | 26.0 | 36.0 | 750/25.0/2 | 600/30.0/4 | None |
| Example 9 | 6.6 | 13.0 | 26.0 | 36.0 | 550/25.0/2# | 750/25.0/2 | 550/25.0/2# |
| Example 10 | 6.6 | 13.0 | 26.0 | 36.0 | 750/25.0/1 | 750/25.0/1$ | 750/25.0/4 |
| Comparative Example 1 | 6.6 | 13.0 | 26.0 | 36.0 | 750/25.0/6 | None | None |

*: Continuous fiber nonwoven fabric having a fiber areal weight of 25 g/m$^2$ is further laminated on the first nonwoven fabric sheet.

#: The first nonwoven fabric sheet and third nonwoven fabric sheet are a nonwoven fabric sheet having T/W = 1.3.

$: The second nonwoven fabric sheet has a size having a width of 700 mm and a length of 700 mm.

[Table 2]

| | Item | Flow of steps | | | | |
|---|---|---|---|---|---|---|
| | | Vacuum step 1 | Steam heating step 1 | Vacuum step 2 | Steam heating step 2 | Vacuum step 3 |
| Example 1 | Temperature (°C) | Room temperature | 160 | Room temperature | 160 | Room temperature |
| | Pressure (kPa) | 30 | Atmospheric pressure | 30 | Atmospheric pressure | 5 |
| | Time (min.) | 5 | 10 | 5 | 10 | 10 |
| Example 2 | Temperature (°C) | Room temperature | 160 | Room temperature | 160 | Room temperature |
| | Pressure (kPa) | 30 | Atmospheric pressure | 30 | Atmospheric pressure | 5 |
| | Time (min.) | 5 | 10 | 5 | 10 | 10 |
| Example 3 | Temperature (°C) | Room temperature | 135 | Room temperature | 135 | Room temperature |
| | Pressure (kPa) | 30 | Atmospheric pressure | 30 | Atmospheric pressure | 5 |
| | Time (min.) | 5 | 7 | 5 | 7 | 5 |
| Example 4 | Temperature (°C) | Room temperature | 160 | Room temperature | 160 | Room temperature |
| | Pressure (kPa) | 30 | Atmospheric pressure | 30 | Atmospheric pressure | 5 |
| | Time (min.) | 5 | 10 | 5 | 10 | 10 |
| Example 5 | Temperature (°C) | Room temperature | 160 | Room temperature | 160 | Room temperature |
| | Pressure (kPa) | 30 | Atmospheric pressure | 30 | Atmospheric pressure | 5 |
| | Time (min.) | 10 | 15 | 10 | 15 | 15 |
| Example 6 | Temperature (°C) | Room temperature | 160 | Room temperature | 160 | Room temperature |
| | Pressure (kPa) | 30 | Atmospheric pressure | 30 | Atmospheric pressure | 5 |
| | Time (min.) | 5 | 10 | 5 | 10 | 10 |
| Example 7 | Temperature (°C) | Room temperature | 160 | Room temperature | 160 | Room temperature |
| | Pressure (kPa) | 30 | Atmospheric pressure | 30 | Atmospheric pressure | 5 |
| | Time (min.) | 5 | 10 | 5 | 10 | 10 |
| Example 8 | Temperature (°C) | Room temperature | 160 | Room temperature | 160 | Room temperature |
| | Pressure (kPa) | 30 | Atmospheric pressure | 30 | Atmospheric pressure | 5 |
| | Time (min.) | 5 | 10 | 5 | 10 | 10 |

(continued)

| | Flow of steps | | | | | |
|---|---|---|---|---|---|---|
| | Item | Vacuum step 1 | Steam heating step 1 | Vacuum step 2 | Steam heating step 2 | Vacuum step 3 |
| Example 9 | Temperature (°C) | Room temperature | 160 | Room temperature | 160 | Room temperature |
| | Pressure (kPa) | 30 | Atmospheric pressure | 30 | Atmospheric pressure | 5 |
| | Time (min.) | 5 | 10 | 5 | 10 | 10 |
| Example 10 | Temperature (°C) | Room temperature | 160 | Room temperature | 160 | Room temperature |
| | Pressure (kPa) | 30 | Atmospheric pressure | 30 | Atmospheric pressure | 5 |
| | Time (min.) | 5 | 10 | 5 | 10 | 10 |
| Comparative Example 1 | Temperature (°C) | Room temperature | 160 | Room temperature | --- | --- |
| | Vacuum degree (kPa) | 30 | Atmospheric pressure | 30 | --- | --- |
| | Time (min.) | 5 | 20 | 5 | --- | --- |

[Table 3]

| | Thickness (mm) | Density (kg/m$^3$) | Hardness (N), Hardness ratio | Interlaminar peel strength (N/50 mm) | Bending feeling (Level) | Cushioning properties (Level) | Washing durability (%) | Moldability (Level) |
|---|---|---|---|---|---|---|---|---|
| Example 1 | 103 | 43.6 | Surface layer portion: 673 | 12.7 | 3 | 3 | 4.2 | 3 |
| | | | Intermediate layer portion: 572 | | | | | |
| | | | Intermediate layer portion/ Surface layer portion: 0.85 | | | | | |
| Example 2 | 95 | 44.2 | Surface layer portion: 450 | 24.0 | 2.5 | 2.5 | 6.8 | 2.5 |
| | | | Intermediate layer portion: 422 | | | | | |
| | | | Intermediate layer portion/ Surface layer portion: 0.94 | | | | | |
| Example 3 | 101 | 44.6 | Surface layer portion: 711 | 10.5 | 3 | 2 | 9.4 | 3 |
| | | | Intermediate layer portion: 698 | | | | | |
| | | | Intermediate layer portion/ Surface layer portion: 0.98 | | | | | |
| Example 4 | 95 | 41.1 | Surface layer portion: 620 | 19.5 | 3 | 3 | 4.1 | 3 |
| | | | Intermediate layer portion: 508 | | | | | |
| | | | Intermediate layer portion/ Surface layer portion: 0.82 | | | | | |
| Example 5 | 205 | 38.0 | Surface layer portion: 705 | 11.5 | 3 | 3 | * | 3 |
| | | | Intermediate layer portion: 510 | | | | | |
| | | | Intermediate layer portion/ Surface layer portion: 0.72 | | | | | |
| Example 6 | 105 | 42.0 | Surface layer portion: 602 | 13.5 | 3 | 3 | 3.4 | 3 |
| | | | Intermediate layer portion: 476 | | | | | |
| | | | Intermediate layer portion/ Surface layer portion: 0.79 | | | | | |

(continued)

| | Thickness (mm) | Density (kg/m³) | Hardness (N), Hardness ratio | Interlaminar peel strength (N/50 mm) | Bending feeling (Level) | Cushioning properties (Level) | Washing durability (%) | Moldability (Level) |
|---|---|---|---|---|---|---|---|---|
| Example 7 | 95 | 41.1 | Surface layer portion: 724 | 19.5 | 3 | 3 | 5.5 | 3 |
| | | | Intermediate layer portion: 524 | | | | | |
| | | | Intermediate layer portion/Surface layer portion: 0.72 | | | | | |
| Example 8 | 95 | 41.1 | Surface layer portion: 750 | 19.5 | 3 | 2.5 | 3.6 | 3 |
| | | | Intermediate layer portion: 525 | | | | | |
| | | | Intermediate layer portion/Surface layer portion: 0.70 | | | | | |
| Example 9 | 95 | 41.1 | Surface layer portion: 517 | 19.5 | 3 | 3 | 6.6 | 3 |
| | | | Intermediate layer portion: 490 | | | | | |
| | | | Intermediate layer portion/Surface layer portion: 0.95 | | | | | |
| Example 10 | 103 | 43.6 | Surface layer portion: 680 | 12.9 | 3 | 3 | 4.4 | 3 |
| | | | Intermediate layer portion: 578 | | | | | |
| | | | Intermediate layer portion/Surface layer portion: 0.85 | | | | | |
| Comparative Example 1 | 105 | 42.9 | Surface layer portion: 628 | 3.8 | 1 | 1 | 18.2 | 1 |
| | | | Intermediate layer portion: 151 | | | | | |
| | | | Intermediate layer portion/Surface layer portion: 0.24 | | | | | |
| *: The sample was too thick to conduct a test for washing durability. | | | | | | | | |

Industrial Applicability

By the present invention, there can be obtained a fiber structure which exhibits excellent comfortable feeling performance, and which is suitable for mattresses for bedding, a bedspread and other bedding articles, seats for various types of vehicles, furniture cushions, and the like, and such a fiber structure is of extremely great commercial significance.

Reference Signs List

1: Heat-bonding conjugate staple fiber or crimped staple fiber (indicated by a curved line)
2: Thicknesswise direction of the fiber structure
3: Arrangement direction of the heat-bonding conjugate staple fiber or crimped staple fiber
4: Fiber structure (front view or side view)
5: Surface layer portion of the fiber structure
6: Intermediate layer portion of the fiber structure
7-1: Nonwoven fabric sheet in which the staple fibers are arranged in the thicknesswise direction of the fiber structure (ordinary size)
7-2: Nonwoven fabric sheet in which the staple fibers are arranged in the thicknesswise direction of the fiber structure (smaller size)
8: Nonwoven fabric sheet in which the staple fibers are arranged in the direction perpendicular to the thicknesswise direction of the fiber structure (ordinary size)
9: Metal plate used for heating treatment, which is placed on or under the fiber structure (one nonwoven fabric sheet or laminate thereof) before heated
10: Pore formed in the metal plate
11: Fiber structure (perspective view)
12: Fiber structure (elevation view)
13: A portion to be bent (middle portion of the fiber structure as viewed in the lengthwise direction) when the fiber structure is bent
14: Bending angle
15: Lengthwise direction of the fiber structure or fiber cushioning material (nonwoven fabric sheet)
16: Width direction of the fiber structure or fiber cushioning material (nonwoven fabric sheet)
17: An example of appropriate sampling for a sample for peel strength measurement
18: An example of inappropriate sampling for a sample for peel strength measurement
19: Protrusion portion having a certain thickness of the mold made of aluminum used in the evaluation for moldability
20: Surface portion having a flat form of the mold made of aluminum used in the evaluation for moldability

**Claims**

1. A fiber structure comprising crimped staple fibers and heat-bonding conjugate staple fibers mixed in a weight ratio of 90/10 to 10/90, the heat-bonding conjugate staple fibers having, as a heat-bonding component disposed on a surface thereof, a thermoplastic resin having a melting point lower by 40°C or more than that of a thermoplastic resin constituting the crimped staple fibers,
   the fiber structure having scattered fixing points in which the heat-bonding conjugate staple fibers are heat-fused and intersect together and/or scattered fixing points in which the heat-bonding conjugate staple fibers and the crimped staple fibers are heat-fused and intersect together,
   the fiber structure having a thickness of 30 mm or more and a density of 10 kg/m$^3$ or more,
   the fiber structure having a laminated structure of three or more layers in at least a thicknesswise direction, wherein a hardness ratio between an intermediate layer portion and a surface layer portion defined when the fiber structure is equally divided into three portions in the thicknesswise direction of the fiber structure is 0.70 to 1.10.

2. The fiber structure according to claim 1, wherein the crimped staple fibers constituting the fiber structure are polyester fibers.

3. The fiber structure according to claim 1 or 2, wherein the crimped staple fibers have a single fiber diameter in the range of 9 to 100 $\mu$m, and the heat-bonding conjugate staple fibers have a single fiber diameter in the range of 15 to 50 $\mu$m.

4. The fiber structure according to any one of claims 1 to 3, wherein the thickness of the fiber structure is in the range of 40 to 300 mm.

5. The fiber structure according to any one of claims 1 to 4, wherein the density of the fiber structure is in the range of 15 to 70 kg/m$^3$.

6. The fiber structure according to any one of claims 1 to 5, which has an interlaminar peel strength of 5.0 N/50 mm or more.

7. The fiber structure according to any one of claims 1 to 6, which contains, in at least part of the fiber structure, a fiber structure in which the fibers used are arranged in the thicknesswise direction of the fiber structure.

8. The fiber structure according to any one of claims 1 to 7, which has a laminated portion of a fiber structure in which the staple fibers are arranged in the thicknesswise direction of the fiber structure and a fiber structure in which the staple fibers are arranged in the direction perpendicular to the thicknesswise direction of the fiber structure.

9. A method for producing a fiber structure, comprising:

mixing crimped staple fibers and heat-bonding conjugate staple fibers in a weight ratio of 90/10 to 10/90 to obtain nonwoven fabric, wherein the heat-bonding conjugate staple fibers have, as a heat-bonding component disposed on a surface thereof, a thermoplastic resin having a melting point lower by 40°C or more than that of a thermoplastic resin constituting the crimped staple fibers;
then providing one sheet of the nonwoven fabric or laminating two or more sheets of the nonwoven fabric; and subjecting the one sheet of the nonwoven fabric or the resultant nonwoven fabric laminate to compression molding using a mold to produce a fiber structure having a thickness of 30 mm or more and a density of 10 kg/m$^3$ or more,
wherein, after the compression molding, a first heating treatment is conducted, then a vacuum treatment is conducted, and further a second heating treatment is conducted.

10. The method for producing a fiber structure according to claim 9, wherein at least one of the first heating treatment and the second heating treatment is a wet heat treatment.

11. The method for producing a fiber structure according to claim 9 or 10, wherein, after the compression molding, and before conducting the first heating treatment, a vacuum treatment is conducted.

**Patentansprüche**

1. Faserstruktur, umfassend gekrimpte Stapelfasern und wärmebindende konjugierte Stapelfasern gemischt in einem Gewichtsverhältnis von 90/10 bis 10/90, wobei die wärmebindenden konjugierten Stapelfasern als Wärmebindungskomponente, die auf einer Oberfläche davon angeordnet ist, ein thermoplastisches Harz mit einem Schmelzpunkt aufweisen, der 40 °C oder mehr unter demjenigen eines thermoplastischen Harzes liegt, welches die gekrimpten Stapelfasern stellt,
wobei die Faserstruktur gestreute Fixierungspunkte aufweist, in denen die wärmebindenden konjugierten Stapelfasern wärmeverschmolzen sind und sich überkreuzen, und/oder gestreute Fixierungspunkte aufweist, in denen die wärmebindenden konjugierten Stapelfasern und die gekrimpten Stapelfasern miteinander wärmeverschmolzen und überkreuzt sind, wobei die Faserstruktur eine Dicke von 30 mm oder mehr und eine Dichte von 10 kg/m$^3$ oder mehr aufweist,
die Faserstruktur eine laminierte Struktur von drei oder mehr Schichten in mindestens einer Dickenrichtung aufweist, wobei ein Härteverhältnis zwischen einem Zwischenschichtabschnitt und einem Oberflächenschichtabschnitt 0,70 bis 1,10 beträgt, definiert dadurch, indem die Faserstruktur gleichmäßig in drei Abschnitte in der Dickenrichtung der Faserstruktur geteilt wird.

2. Faserstruktur nach Anspruch 1, wobei die gekrimpten Stapelfasern, welche die Faserstruktur stellen, Polyesterfasern sind.

3. Faserstruktur nach Anspruch 1 oder 2, wobei die gekrimpten Stapelfasern einen Einzelfaserdurchmesser im Bereich von 9 bis 100 μm haben, und wobei die wärmebindenden konjugierten Stapelfasern einen Einzelfaserdurchmesser im Bereich von 15 bis 50 μm haben.

4. Faserstruktur nach einem der Ansprüche 1 bis 3, wobei die Dicke der Faserstruktur im Bereich von 40 bis 300 mm liegt.

5. Faserstruktur nach einem der Ansprüche 1 bis 4, wobei die Dichte der Faserstruktur im Bereich von 15 bis 70 kg/m$^3$ liegt.

6. Faserstruktur nach einem der Ansprüche 1 bis 5, die eine interlaminare Schälfestigkeit von 5,0 N/50 mm oder mehr hat.

7. Faserstruktur nach einem der Ansprüche 1 bis 6, die mindestens in einem Teil der Faserstruktur eine Faserstruktur enthält, in der die verwendeten Fasern in der Dickenrichtung der Faserstruktur angeordnet sind.

8. Faserstruktur nach einem der Ansprüche 1 bis 7, die einen laminierten Abschnitt einer Faserstruktur, in der die Stapelfasern in der Dickenrichtung der Faserstruktur angeordnet sind, und einer Faserstruktur aufweist, in der die Stapelfasern in der Richtung senkrecht zu der Dickenrichtung der Faserstruktur angeordnet sind.

9. Verfahren zum Produzieren einer Faserstruktur, umfassend:

Mischen von gekrimpten Stapelfasern und wärmebindenden konjugierten Stapelfasern in einem Gewichtsverhältnis von 90/10 bis 10/90, um Vliestextil zu erhalten, wobei die wärmebindenden konjugierten Stapelfasern als Wärmebindungskomponente, die auf einer Oberfläche davon angeordnet ist, ein thermoplastisches Harz mit einem Schmelzpunkt aufweisen, der 40 °C oder mehr unter demjenigen eines thermoplastischen Harzes liegt, welches die gekrimpten Stapelfasern stellt;
danach Bereitstellen einer Lage des Vliestextils oder Laminieren von zwei oder mehr Lagen des Vliestextils; und Unterziehen der einen Lage des Vliestextils oder des resultierenden Vliestextillaminats Formpressen unter Verwendung einer Form, um eine Faserstruktur mit einer Dicke von 30 mm oder mehr und einer Dichte von 10 kg/m$^3$ oder mehr zu produzieren,
wobei nach dem Formpressen eine erste Wärmebehandlung durchgeführt wird, dann eine Vakuumbehandlung durchgeführt wird, und des Weiteren eine zweite Wärmebehandlung durchgeführt wird.

10. Verfahren zum Produzieren einer Faserstruktur nach Anspruch 9, wobei mindestens eine von der ersten Wärmebehandlung und der zweiten Wärmebehandlung eine nasse Wärmebehandlung ist.

11. Verfahren zum Produzieren einer Faserstruktur nach Anspruch 9 oder 10, wobei nach dem Formpressen und vor dem Durchführen der ersten Wärmebehandlung eine Vakuumbehandlung durchgeführt wird.

**Revendications**

1. Structure fibreuse comprenant des fibres discontinues crêpées et des fibres discontinues conjuguées de liage thermique mélangées dans un rapport pondéral de 90/10 à 10/90, les fibres discontinues conjuguées de liage thermique ayant, comme constituant de liage thermique disposé sur une surface de celles-ci, une résine thermoplastique ayant un point de fusion inférieur d'au moins 40 °C à celui d'une résine thermoplastique constituant les fibres discontinues crêpées,
la structure fibreuse ayant des points de fixation dispersés auxquels les fibres discontinues conjuguées de liage thermique sont fusionnées thermiquement et se croisent et/ou des points de fixation dispersés auxquels les fibres discontinues conjuguées de liage thermique et les fibres discontinues crêpées sont fusionnées thermiquement et se croisent,
la structure fibreuse ayant une épaisseur de 30 mm ou plus et une masse volumique de 10 kg/m$^3$ ou plus,
la structure fibreuse ayant une structure stratifiée d'au moins trois couches au moins dans une direction de l'épaisseur,
un rapport de dureté entre une portion de couche intermédiaire et une portion de couche de surface définies quand la structure fibreuse est divisée de façon égale en trois portions dans la direction de l'épaisseur de la structure fibreuse étant de 0,70 à 1,10.

2. Structure fibreuse selon la revendication 1, les fibres discontinues crêpées constituant la structure fibreuse étant des fibres de polyester.

3. Structure fibreuse selon la revendication 1 ou 2, dans laquelle les fibres discontinues crêpées ont un seul diamètre de fibre dans la gamme de 9 à 100 $\mu$m, et les fibres discontinues conjuguées de liage thermique ont un seul diamètre de fibre dans la gamme de 15 à 50 $\mu$m.

4. Structure fibreuse selon l'une quelconque des revendications 1 à 3, l'épaisseur de la structure fibreuse se situant dans la gamme de 40 à 300 mm.

5. Structure fibreuse selon l'une quelconque des revendications 1 à 4, la masse volumique de la structure fibreuse se situant dans la gamme de 15 à 70 kg/m$^3$.

6. Structure fibreuse selon l'une quelconque des revendications 1 à 5, qui a une résistance au décollement interlaminaire de 5,0 N/50 mm ou plus.

7. Structure fibreuse selon l'une quelconque des revendications 1 à 6, qui contient, au moins dans une partie de la structure fibreuse, une structure fibreuse dans laquelle les fibres utilisées sont disposées dans la direction de l'épaisseur de la structure fibreuse.

8. Structure fibreuse selon l'une quelconque des revendications 1 à 7, qui a une portion stratifiée d'une structure fibreuse dans laquelle les fibres discontinues sont disposées dans la direction de l'épaisseur de la structure fibreuse et d'une structure fibreuse dans laquelle les fibres discontinues sont disposées dans la direction perpendiculaire à la direction de l'épaisseur de la structure fibreuse.

9. Procédé de production d'une structure fibreuse, comprenant :

le mélange de fibres discontinues crêpées et de fibres discontinues conjuguées de liage thermique dans un rapport pondéral de 90/10 à 10/90 pour obtenir un non-tissé, les fibres discontinues conjuguées de liage thermique ayant, comme constituant de liage thermique disposé sur une surface de celles-ci, une résine thermoplastique ayant un point de fusion inférieur d'au moins 40 °C à celui d'une résine thermoplastique constituant les fibres discontinues crêpées ;
puis l'obtention d'une feuille du non-tissé ou la stratification d'au moins deux feuilles du non-tissé ; et
la soumission de la feuille du non-tissé ou du stratifié de non-tissé résultant à un moulage par compression au moyen d'un moule pour produire une structure fibreuse ayant une épaisseur de 30 mm plus et une masse volumique de 10 kg/m$^3$ ou plus,
dans lequel, après le moulage par compression, un premier traitement thermique est conduit, puis un traitement sous vide est conduit, et par la suite un deuxième traitement thermique est conduit.

10. Procédé de production d'une structure fibreuse selon la revendication 9, dans lequel au moins un traitement parmi le premier traitement thermique et le deuxième traitement thermique est un traitement thermique humide.

11. Procédé de production d'une structure fibreuse selon la revendication 9 ou 10 dans lequel, après le moulage par compression, et avant la conduite du premier traitement thermique, un traitement sous vide est conduit.

[FIG. 1]

[FIG. 2]

[FIG. 3]

[FIG. 4]

[FIG. 5]

[FIG. 6]

[FIG. 7]

[FIG. 8]

[FIG. 9]

Level 1　　　　　Level 2　　　　　Level 3

**EP 3 591 108 B1**

## REFERENCES CITED IN THE DESCRIPTION

*This list of references cited by the applicant is for the reader's convenience only. It does not form part of the European patent document. Even though great care has been taken in compiling the references, errors or omissions cannot be excluded and the EPO disclaims all liability in this regard.*

**Patent documents cited in the description**

- JP 2015080685 A
- JP 2010253725 A
- JP H04245965 B
- GB 2405646 A
- JP 2007303831 A